# DEMANDE DE BREVET EUROPEEN

(11) **EP 4 825 155 A1**
(43) Date de publication de la demande: **21.10.2026**
(21) Numéro de dépôt: 26162100.7
(22) Date de dépôt: 03.03.2026
(51) Int. Cl.: A01C 21/00

(54) **MÉTHODE DE FERTILISATION**

(30) Priorité: 18.04.2025 FR 2504187; 24.11.2025 FR 2513770
(71) Demandeur: Polyor SAS, 54000 Nancy (FR)
(72) Inventeur: Claude, Pierre-Philippe, 54000 Nancy (FR)

(57) **Abrégé**

**Méthode de fertilisation raisonnée** pour la préparation de plans de fertilisation au niveau de la parcelle agricole comprenant *apprentissage automatique* (AA) d'un algorithme *d'intelligence artificielle* (IA) à partir de conditions initiales contenues dans une quelconque base de données **dbase_int** applicable à une quelconque base de données expérimentales dbase_exp contenant de l'information sur un ensemble *d'itinéraires technique* (itec) mais aussi est surtout le criblage réitératif de dbase_exp à titre *d'intelligence artificielle collective* (CAIAC)

## Description

### État de la technique et problème technique

### Divers aspects de l'agriculture durable

La fertilisation raisonnée et l'agriculture de conservation [des sols] fait l'objet d'innombrables articles, thèses et études. Tous présupposent un équilibre entre doses d'engrais, fourniture du sols - ou au sols via des produits résiduels organiques et « résidus » de culture, et besoins élémentaires de la culture pour la pleine réalisation de son potentiel de rendement (Boulaine et al. 1995, Cristofari et al. 2018.; Bonny et al. 1993, Maxime et al. 1995, Vankeerberghen et al. 2014, Beegle et al. 1995, Boizard & Gate 2025, Guyot et al. 1985, Laurent 2015, Morel et al. 1992, Meynard et al. 2019). Cette approche par *bilan* massique a vécue et été critiquée maintes fois pour son manque de précision et d'ergonomie (Schut et al. 2020, Meynard et al. 2019, Ravier et al. 2016).

Plus simplement, EP4252516 et EP4101280 proposèrent que la durabilité des grandes cultures est fonction des rendements azotés et plus particulièrement des *rendements unitaires de l'azote fertilisant* (RUN ; kg-N_{grain}/kg_N_{fertilisant}). En effet, des rendements unitaires trop élevés épuisent la MOS en retournant aux sols des résidu de culture trop pauvre en azote pour être correctement humifiés, tandis que des rendement unitaires trop faible sont synonymes de reliquats d'azote minérale trop importants (EUNEP 2016).

La fertilisation raisonnée doit aussi apprécier la dimension socio-économique des agriculteurs confrontés à des impératifs de rentabilités, y compris du foncier (MDPI et al. 2023, ISGP et al. 2016, Oppermann et al. 2021, etc.). Cela notamment sur les parcelles a priori moins productives. Or, la prise en compte de ces contraintes socio-économiques des agriculteurs sont trop souvent archi-complexes (Ewert et al. 2023, Bergez et al. 2019, ISGP et al. 2016, MDPI et al. 2023, etc.). Les approches multicritères de Zahm et al. 2023 compliquent encore plus cette appréciation socio-économique de la durabilité des grandes cultures *non-Fabaceae.*

### Contribution possible de l'IA à l'agriculture durable

*L'intelligence artificielle* (IA) et la data-science sont aujourd'hui utilisées en fertilisation raisonnée pour la conservation des sols, à savoir une série d'inventions brevetées par Polyor SAS (www.polyor.eu ; EP3821688, EP4101280, EP4252516 et EP4491001). Il y a aussi EP25206011.6 comportant des plans de fertilisation favorisant la conservation de la matière organique du sol et cela sans prélèvement ou chaulage du sol. Des méta-modèles reliant TUN et les recommandations P, K et H permettent ensuite le calcul, la formation, la dispense en vrac et application modulée au champ de tels engrais.

Or, en conseil agronomique un des obstacles à la réalisation de l'IA demeure la collecte et la remontée d'informations détaillées sur les itinéraires techniques. Ces quelques données sont pourtant convoitées par les firmes en agriculture de précision, régénérative et bas-carbone. Par exemple MyEasyFarm (www.myeasyfarm.com/myeasyfarm-starter/), SMAG (www.smag.tech/notre-ecosysteme-partenaire/), BeApi (www.beapi.tech/), Abelio (www.abelio.io/captation-de-donnees/), Wanaka (www.wanaka.io/ble.html), Spotifarm (www.spotifarm.fr/) ou encore TerraNostra (www.fundacjaterranostra.pl/fundacja/).

Polyor SAS (www.polyor.eu) propose une approche dématérialisée a priori plus autonome à cet égard à base d'IA. Cette approche - dite AgroNum^{™}, a le mérite de nécessité peu ou pas de remontée d'information de la parcelle, y compris et surtout via le prélèvement de terre. AgroNum^{™} est donc très ergonomique et implique une simplification conceptuelle via l'application réitérative de simples règles heuristiques concernant la conservation de la matière organique du sol, règles a priori compatibles avec *l'apprentissage automatique* de tels algorithme d'IA à titre d'intelligence collective.

Or, ces notions d'apprentissage automatique existent ; Balderas et al. 2025, Chaudhari et al. 2025, Gómez-Zamanillo et al. 2025, Hossen et al. 2025, Huan et al. 2025, Mortazavi et al. 2025, Reddy et al. 2025, Yang et al. 2025, etc. À savoir ;
- En apprentissage supervisé les réponses souhaitées sont connues et utilisées pour entraîner le modèle. Une première phase détermine un modèle à partir des données étiquetées. La seconde phase consiste à prédire une nouvelle donnée, connaissant le modèle préalablement appris. L'apprentissage automatique construit une fonction f telle que Y = f(X).
- L'apprentissage non supervisé suppose que l'opérateur dispose que d'exemples et que le nombre de classes et leur nature n'ont pas été prédéterminées. Il faut classer les données en groupes *homogènes* afin de trouver une fonction Y = f(X) ne disposant pas de valeurs de Y. Il n'y a généralement pas de bonne ou de mauvaise réponse mais des **similarités mathématiques au sein d'une base de données de X sans valeurs de Y correspondantes, les Y étant généralement plus compliqués et/ou coûteux à obtenir que les X.**

- L'apprentissage semi-supervisé & partiellement supervisé fait apparaître la distribution sous-jacente *d'exemples* et met en œuvre des données manquantes.
- L'apprentissage auto-supervisé consiste d'apprentissage supervisé d'un problème non supervisé en créant des **Y d'X pour passer à un apprentissage supervisé en masquant des X pour en faire des Y.** Cela revient alors à essayer de reconstruire un ensemble de mots manquants en fonction des mots précédents et/ou suivants.
- L'apprentissage par renforcement est similaire puisqu'il n'y a à l'origine pas de données de sorties Y, ni même de données d'entrée X, pour construire Y = f(X), mais simplement des **règles [heuristiques] et un « objectif » à atteindre.** Le modèle **crée *lui-même* sa base de données** en testant des combinaisons de données d'entrée X et sorties Y ; s'il est conforme, le modèle est récompensé. Le modèle apprend de manière **incrémental.**
- L'apprentissage par transfert applique des connaissances acquises antérieurement sur de nouvelles tâches ou domaines partageant des similitudes afin de transférer la connaissance de la ou des tâche(s) source(s) vers la ou les tâche(s) cible(s). Il part d'un modèle existant et le réen-traîne afin d'obtenir de meilleures performances à moindre coût qu'en repartant de zéro.

### Le problème technique constaté

Ces méthodes d'apprentissage automatique sont cependant peu adaptées au conseil agricole puisqu'elles impliquent l'annualisation des données agronomiques (ARGO) et climatiques (CLIM) ainsi que l'itinéraire technique (itec) détaillé. Cela complique tout et enchérit la calibration et l'autoapprentissage de ces algorithmes d'IA. La désaisonnalisation - ou *désannualisation* (sic), des telles bases de données (dbases) permettrait *d'auto-nomiser* la calibration plus fine de l'IA AgroNum^{™}. Cette *autonomisation* existe en ingénierie, mécaniques, logistiques, etc. (Wang et al. 2015), mais peu ou pas en agriculture (Sharifmousavi et al. 2024) du fait, justement, de cette annualisation des données pédocli-matiques à remonter de la parcelle. Paradoxalement, cette notion de *désaisonnalisation* (detrending, angl.) est très utilisée en modélisation stochastique mais que pour la prédiction des rendements (Agnolucci et al 2020, Kumar et al. 2024, Li et al. 2024, Lu et al. 2017, Ye et al. 2015 et Zhu et al. 2019).

Pourtant, ce que recherche l'agriculteur/trices est surtout un *objectif* de rendement conduisant à la conservation de la matière organique du sol, et cela dans les limités socio-économique qui s'imposent. Pour le reste, l'agriculteur/trice est parfaitement capable de déterminer immédiatement si un objectif de rendement et/ou les doses d'engrais correspondantes sont faisables et rentables. Traduire cette logique socio-économique propre à chaque exploitant est sûrement la façon la plus simple d'assurer cette intégration socio-économique et environnementales propre à l'agriculture durable. Or, dans ne nombreuse circonstances, les objectifs de rendements azotés RDN durables préconisés, et leurs doses d'engrais azotés TUN correspondantes ne vont pas être réalisables pour des raisons plus socio-économiques qu'environnementale. Par exemple, les sols intrinsèquement les moins productifs, les moins « fertiles », vont donner des RDN trop faibles pour simplement amortir le coût du foncier, souvent déconnecté de la productivité agronomique de la parcelle. Au contraire, la rentabilité d'exploiter à fond la fertilité de sols plus productifs n'est pas nécessairement justifiable économiquement en raison de contraintes phytosanitaire et/ou de baisses importantes des rendements unitaires de l'azote fertilisant à haut taux de fertilisation (Pan et al. 2020, Hlisnikovsky et al. 2020, Monjardino et al. 2019).

### Solution technique proposée

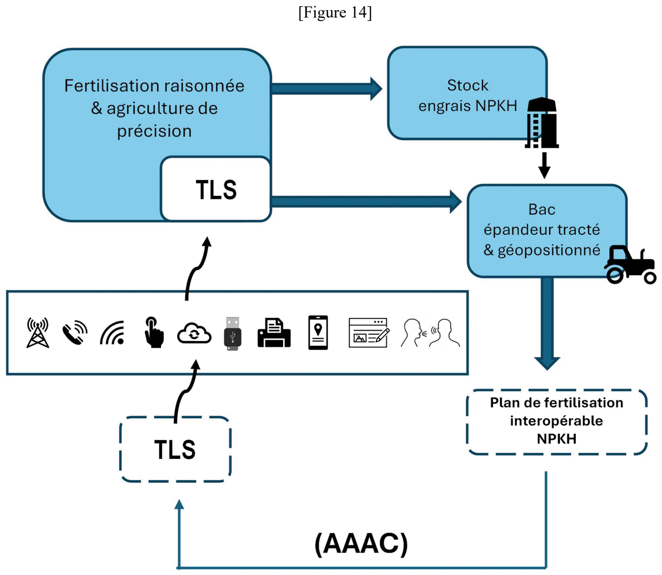

Donc, trois constats. Premièrement, l'élaboration de plans de fertilisations sous contraintes à titre de conseil agricole est source d'information ; cette information rendra nécessairement plus réalisable ces plans a priori virtuels. Deuxièmement, la réalité socio-économique des agriculteurs/trices les obligent - notamment sur parcelles a priori moins inhéremment productives, à faire preuve d'un haut niveau de technicité afin d'obtenir des rendements suffisants pour amortir le coût des intrants et du foncier ; ce progrès technique (pTec) mérite d'être récompenser via l'émission de crédits azote remboursables (RNC, EP4491001). Troisièmement, il est possible et souhaitable de désannualiser les données agronomiques (AGRO) en remplaçant les data météorologiques et moyennes climatologiques par des probabilité de transition markoviennes (Pij) plus stationnaires. Ces trois constats seront ici mis à contribution pour faciliter l*'autoapprentissage autonome sous contraintes* (AAAC ; [Figure 14]) de la méthode de fertilisation raisonnée.

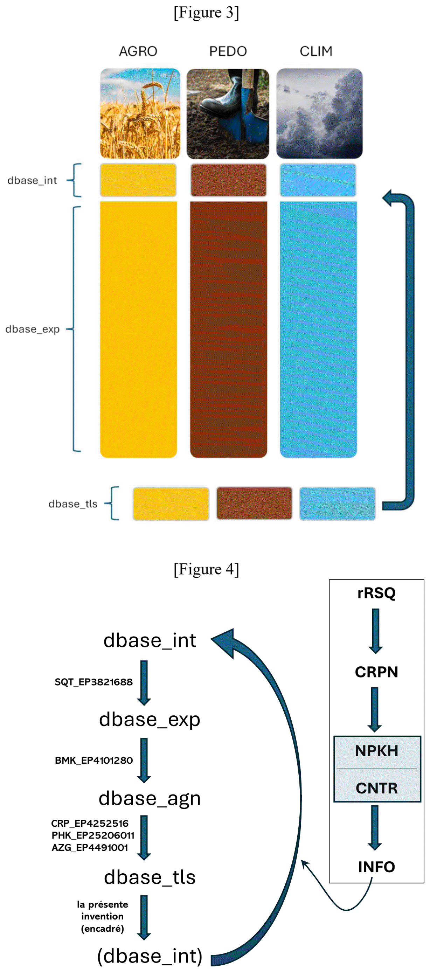

Comme nous le verrons, la solution technique comprend l'intégration à une base de données dbase_exp à titre de dbase_int des conditions initiales (idata ; dbase_tls) provenant *d'itinéraires techniques* (itec) virtuels réalisables voire réalisés [Figure 3]. Par conséquent ceux-ci doivent être *désannualisés* et *contraints.* Désannualisé en ce sens que l'année de la récolte n'est plus une donnée essentielle, seule la performance agronomique de l'itec importe. Mieux, parmi ces itinéraires techniques itec seuls ceux donnant des rendements unitaires N, P et K (RUN, RUP, RUK) et des seuils telluriques PK (cPK), nécessitant des doses d'engrais pK (dPK), aboutissant à des pH telluriques commensurables à ceux généralement attendus par la personne du métier familière avec l'état de la technique. Ces contraintes seront appliquées aux plans de fertilisation a priori virtuels - dits NPKH [Figure 3] obtenus avantageusement selon EP25206011.6 alinéas [0020] à [0036] sont interopérable avec l'agriculture de précision et le conseil agricole pour grandes culture à graines *non-Fabaceae.* Les seuils critiques en phosphore et potassium telluriques cPK ainsi que les pH telluriques éventuels (pHe) sont fonction de du taux de fertilisation azotée TUN et donc de l'objectif de rendement protéique RDN correspondant. Les contraintes, elles, portent sur les pH telluriques de références, les rendements unitaires RUP/K, les seuils critiques cPK par rapport à disponibilités telluriques PK ainsi que les seuils critiques de références à travers l'Europe selon EP25206011.6 alinéa [0042] de manière à assurer une certaine commensurabilité avec l'état de la technique.

La dimension climatique et donc météorologique des bases de données AgroNum^{™} est assurée par un recours massifs à des séries temporelles climatiques avec propriétés de chaines de Markov et aux probabilités de transition Pij qui en sont issues. (Azimi et al. 2020, Bazzi et al. 2017, Huzsvai et al. 2025, Jurafsky & Martin 2025, Mizutani et al. 2017, Shen et al. 2013, etc.). Toutes les études - Adam et al. 2018, Chen et al. 2015, Colin et al. 2017, Rankin 2016 et Xu et al. 2017, font état de techniques pour améliorer le calcul de Pij à l'aide d'IA, mais non comment les Pij peuvent augmenter le pouvoir prédictif d'algorithmes d'IA. Idem pour les brevets - AU2016328634, KR20200029657, US10093943, US10109024, US10188037 et bien d'autres. Aucun mentionnent l'utilisation de Pij comme variable indépendante dans des algorithmes d'IA. Les Pij servent surtout à recréer des séries chronologiques et non à affiner des prédictions plus ponctuelles de la performance agronomique comme le propose la présente invention.

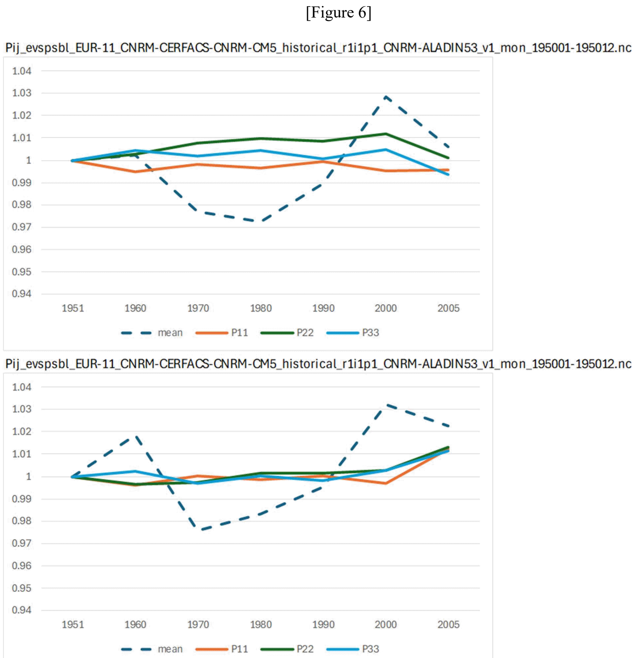

Or, les Pij climatiques sont plutôt invariables, fixes ou stationnaires à travers le temps [Figure 6]. Il est donc possible de valoriser cette stationnarité via la désaisonnalisation des données agronomiques en faisant fi de l'année de culture comme variable prédictive. Cela implique que des données sur les rendements de différents itinéraires techniques itec sont maintenant inclus dans la base de données sans avoir à connaître l'année de la campagne. Mieux, il n'est donc plus nécessaire de renseigner les moyennes pluriannuelles ou quinquennales comme ce fut le cas jusqu'à maintenant du fait de l'imbrication implicite de EP3821688 dans la réalisation de EP4101280, EP4252516, EP4491001 et EP25206011.6.

**Il s'agit donc d'une méthode de fertilisation raisonnée** pour la préparation de plans de fertilisation au niveau de la parcelle agricole comprenant *apprentissage automatique* (AA) d'un algorithme d*'intelligence artificielle* (IA) à partir de conditions initiales contenues dans une quelconque base de données **dbase_int** applicable à une quelconque base de données expérimentales **dbase_exp** contenant de l'information sur un ensemble *d'itinéraires technique* (itec) mais aussi est surtout le criblage réitératif de dbase_exp à titre *d'intelligence artificielle collective* (CAIAC). Celle-ci comprend aussi ;
✔ un mode d'appréciation de la performance agronomique ;
✔ des courbe de réponse des rendements azotés RDN à l'azote fertilisant dites CRP(N);
✔ des plans de fertilisations N, P, K & H *candidats* dits ici NPKH et placés en dbase_tls;
✔ une mesure quantitative du progrès technique pTec associé à la performance agronomique ;
✔ des contraintes applicables lors de la réalisation *virtuelle* desdits plans de fertilisations.

Elle est caractérisée en ce que l'information provenant de l'application desdites contraintes aux dits plans de fertilisation est par la suite introduite dans la **dbase_int** contenant les conditions initiales pour ladite calibration réitérative de l'algorithme.

Du fait de la calibration réitérative à titre *d'intelligence artificielle collective* (CAIAC) seules les data agro-pédoclimatiqus des itinéraires techniques les plus durables conduisant à la conservation de la matière organique du sol sont retenus dans la **dbase_agn** pour la calibration de l'algorithme générant les courbes de réponse à l'azote fertilisant CRP(N),

Procéder sans prélèvements de sols de la parcelle simplifie la préparation des plans de fertilisation, l'échantillonnage - s'il y a, étant, lui, limité aux rendements agronomiques, tandis que la taille des doses d'application d'engrais NPK étant simplement relevés et transmis par l'agriculteur, sans échantillonnage,

L'agriculteur/trice n'est plus obligé/e de de transmettre les détails de ses pratiques culturales - y compris l'année du semis, culture & récolte, seules le coordonnées GPS au centre de la parcelle, voire l'objectif de rendement azoté RDN étant transmis pour fin de conseil agricole effectué donc sans remontée d'informations détaillées de l'itec sur la parcelle.

Cette méthode est aussi caractérisée en ce que le susdit AA contraint (AAC) est ainsi rendu *autonome* (AAAC) lorsque le conseil agricole est ainsi réalisé virtuellement du fait de l'application des susdites contraintes aux plans de fertilisations candidats réalisés virtuellement selon l'état de la technique rendant du coup facultatif la remontée de données agriculteur de la parcelle.

Le mode d'appréciation de la performance agronomique pour grandes cultures non-*Fabaceae* au niveau de la parcelle est selon EP4252516 alinéas [0015] et EP4491001 équations [01], [02] et [03] selon la formule (run²)/**d**_{RUN}/iSQ = **RUN/iSQ** = **RSQ** sachant que le rendement unitaire simple, run (kg-N_{grain}/kg-N_{fertilisant}) ajusté selon un rendement standard empirique, d_RUN, et un indice de la productivité inhérente de la parcelle, iSQ, et que l'algorithme d'IA calcul la référence rRSQ pour la parcelle, et la durabilité entant que **Durabilité** = **RSQ/rRSQ** ≈ **1.00,** les RUN réputés durable servent au rétro-calcul du besoin unitaire de la pratique culturale ou l'itinéraire technique en question, a_AgroNum pour estimer la dose prévisionnelle d'engrais azotée correspondante, TUN (kg-Nf/ha) = [a_AgroNum · RDN] lorsque qu'**a_AgroNum** = 1/√(**RUN x dRUN)** de manière à rétro-calculer l'objectif de rendement durable, RDN (kg-Ng/ha) correspondant = [TUN/a_AgroNum ], mais aussi ;
d_{RUN} est perfectible par compilation, voire méta-analyse, tandis que les parcelles aux iSQ les plus faibles et donc a priori les moins inhéremment productives peuvent et vont bénéficier le plus de progrès technique **pTec** de manière à atteindre, voire dépasser, une certaine moyenne environnementale **ASQ** repérable sur une courbe de réponse à l'azote propre surmontant du coup des de telles contraintes socio-économiques ;
Des courbes de réponse à l'azote fertilisant ***RDN*** = *f*(*TUN*) est établie selon EP4252516, première revendication et alinéas [0017] à [0033], et donc élaborée sur la base de données climatiques CLIM et agronomiques AGRO sur le potentiel de rendement protéique RDN de la parcelle ainsi qu'une deuxième courbe de réponse à l'azote fertilisant TUN à titre de moyenne environnementale, toujours selon EP4252516 mais comportant comme valeurs de RDN moyennes locales ou régionales prédites au niveau de la parcelle selon le même procédé qu'en EP4252516 à titre de moyenne environnementale dites ici ASQ ;
Un plan de fertilisation P, K & H dit ici NPKH est réalisé selon la première revendication d'EP25206011.6 et ses alinéas [0020] à [0035] et donc sur la base de dbase_AgroNum **(dbase_agn)** contenant les data AGRO, PEDO et CLIM dont les itinéraires techniques conduisant à la conservation de la matière organique du sol dits virtuels contiennent néanmoins les objectifs de rendements protéiques RDN et/ou les taux de fertilisations azotées TUN souhaités correspondant ;
Le progrès technique pTec est établit et définit selon EP4491001 alinéa [0063] à savoir en tant qu'augmentation des rendements azotés RDN attribuable à une modification des itinéraires techniques itec par rapport à la courbe de réponse CRP(N) (infra) [Équation 8] EP4491001 lorsque cette performance agronomique est supérieure à l'efficacité de cette modification selon les équations [05] à [08] EP4491001 permettant ainsi le calcul et l'émission éventuels de crédits azote remboursables RNC selon les équations 4 à 14 proposées dans EP4491001 ;
Les contraintes applicables lors de la réalisation desdits plans de fertilisation NPKH dont les données AGRO sont contenues dans la base de données **dbase_tls** de manière à ce que ces plans de fertilisation contiennent par la suite des valeurs PEDO commensurables aux valeurs les plus courantes, à savoir les pH telluriques de références, les disponibilités de P & K tellurique, les seuil critiques P & K tellurique et les rendements unitaires RUP & RUK permettant ains de valoriser **dbase_tls** maintenant composée de données AGRO de tels plans de fertilisation virtuels et des données PEDO & CLIM correspondantes réintégrées réitérativement à la base de donnée **dbase_int.**

Les bases de données dbase ne contiennent *pas* de données AGRO, PEDO ou CLIM annualisées et/ou faisant référence à l'année de récolte ou de la campagne mais pour le reste obtenues selon EP3821688 alinéas [0053] à [0055] et comportent les coordonnées géospatiales de latitude / longitude les plus au centre de la parcelle, et dont la première tranche comprend les données AGRO des rendements in situ transmises par l'utilisateur (RDT, RDN et RUN), la deuxième tranche les data pédologique PEDO, et la troisième tranche de données climatique CLIM afin de prendre en compte la météorologie.

Les plans de fertilisation NPKH selon EP25206011.6 alinéas [0020] à [0036] sont interopérables avec l'agriculture de précision pour grandes culture à graines *non-Fabaceae* de courbes de réponses au niveau de la parcelle décrivant les doses d'application d'engrais phosphoriques et potassique dPK.

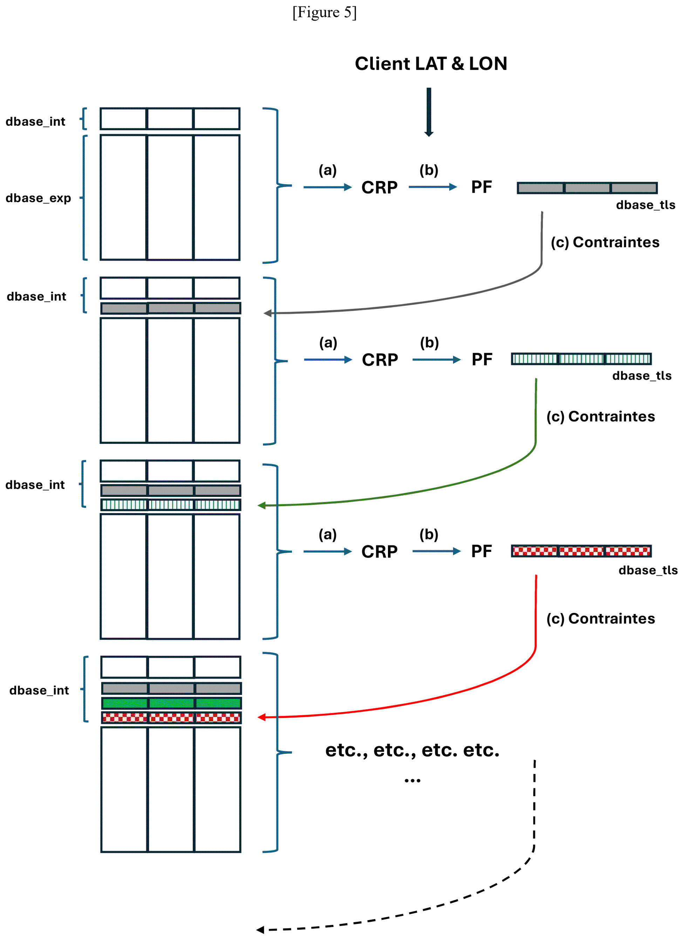

À titre d'information socio-économique et agronomique utile à l'agriculteur-utilisateur, seules les taux et modes de fertilisation minéral commensurables avec l'état de la technique parce que contraints de respecter +/- certains écarts [0041] sont retenus et intégrés à dbase_int [Figures 4 & 5].

cette information (ré)introduite à titre de nouvelles conditions initiales comprend les rendements unitaires RDN, RDP et RDK, les taux de fertilisations N, P & K correspondant ainsi que les coordonnées GPS au centre de la parcelle cette information provenant de la « réalisation virtuelle » (sic) de plans de fertilisation AgroNum^{™} contraints de manière à être commensurables à l'état de la technique est décrite formellement entant que *information* = *f*(*PPF, contraintes*) sachant que cette information va par la suite servir à l'élaboration de plan prévisionnels de fertilisation *PPF' = f*(*PPF, information*)*.*

*L'intelligence artificielle collective* CAIAC est une implémentation de l'IA qui comportant une rétroaction continuelle de nouvelle conditions initiales et/ou expérimentales appliquées à la calibration d'un quelconque algorithme prédictif, conditions collectivement reconnues ou reconnaissables comme commensurables avec l'état de la technique et la réglementation. dbase_int contient les conditions initiales considérées comme collectivement acceptable à titre *d'intelligence collective* (CAIAC), dbase_exp l'ensemble des itinéraires techniques expérimentaux y compris les témoins - positifs ou négatifs, modalités de références à l'essais, etc. qui seront confrontées à ce premier jet d'intelligence collective, dbase_agn le résultat de ce criblage impartial par imposition d'une simple règle heuristique au sens de EP4101280 alinéas [0018] à [0021], et enfin dbase_tls contient les plans prévisionnels de fertilisations virtuels contraints à être commensurables à l'état de la technique au sens d'EP25206011.6 alinéas [0030] à [0035] ajoutés à dbase_int.

Cette méthode est aussi caractérisée en ce que ;
- la dbase_agn, sous-ensemble de la dbase_exp ne comportant que des itinéraires techniques aux rendements unitaires ajustés RUN conduisant à la conservation de la matière organique du sol du fait du criblage de dbase_exp ne retenant que les itinéraires techniques au sens de EP4101280 aux Figures 1 & 2 et alinéas [0018] à [0026], et EP4252516 à la Figure 4 et alinéas [0010] et [0011], contient à titre de variables AGRO à prédire par IA calibrée selon dbase_agn des doses d'engrais dPK et seuils critique cPK, et en ce que ;
- l'établissement des relations [dPK :: TUN], [cPK :: dPK] et [pHe :: TUN] ce par modèles algébriques linéaires ou multilinéaires comportant au moins les coordonnées latitude & longitude les plus au centre de la parcelle, un quelconque indice de productivité de la parcelle, ou encore la teneur en argile de la parcelle de manière à ce que pour chaque unité cartographique locale ces valeurs de TUN (dN), dPK, cPK et pH puissent être mises en relation.

La préparation des plans de fertilisation virtuels se fait selon EP25206011.6 alinéa [0020] sur la base d'unités cartographiques locales et de courbes de réponses décrivant les doses d'application d'engrais phosphoriques et potassique dPK, les seuils critiques en phosphore et potassium telluriques cPK ainsi que les *pH telluriques éventuels* (pHe) fonction de du taux de fertilisation azotée TUN et donc de l'objectif de rendement protéique RDN correspondant. Pour ce faire, il faut savoir que ;
- les rRSQ à titre de data AGRO servant au rétro-calcul de RUN sont remplacés par des valeurs de dPK, tPK à titre de cPK et pHe afin de calibrer pour chacune de ces variables un algorithme d'IA prédictive ;
- les relations [dPK ::TUN] ou [dPK ::RDN] indiquent les doses d'engrais PK à appliquer au champ pour atteindre les objectifs de rendements RDN durables selon la courbe de réponse [RDN ::TUN] au sens de EP4252516,
- les relations [tPK ::dPK], [tPK ::RDN] ou [tPK ::TUN] établissent les seuils critiques cPK au-dessous desquels les susdites doses d'engrais PK doivent impérativement être appliquées pour atteindre ces susdits objectif de rendements RDN,
- les relations [pHe ::TUN] , [pHe ::RDN] voire [pHe ::dPK] déterminent le statut acido-basique SAB éventuel du sol à ces susdits taux de fertilisation N, P & K.

Les contraintes portent sur les pH telluriques de références, les rendements unitaires RUP/K, les seuils critiques cPK par rapport à disponibilités telluriques PK ainsi que les seuils critiques de références à travers l'Europe selon EP25206011.6 alinéa [0042] assurant la commensurabilité avec l'état de la technique.

Ces recommandations doses d'engrais dPK, seuils critiques cPK et pH telluriques éventuels pHe sont contraints de manière à assurer leur commensurabilité avec les références habituelles et obtenir des plans de fertilisation plus ergonomiques et moins coûteux. Les pHe - eau ou CaCl₂, sont commensurables à ceux proposés par le conseil agricole via analyse de terre et/ou de base de données reconnues,

Les rendements phosphoriques RDP & RDK sont commensurables aux doses dPK recommandées par le plan de fertilisation afin d'assurer le remplacement durable des éléments exportés. Les seuils cPK sont, eux, commensurables aux disponibilités - alias fournitures du sol en de P et K telluriques (*available_PK,* angl.), et enfin

les itinéraires technique itec retenues ont des rendements unitaires simples (run ; kg_Ngrain/kg_Nfertilisant) compris entre 0.6 et 1.0 +/- 10% par comparaison aux itec témoin dont ces run simples sont compris entre 0.5 et 0.9 +/- 10% sachant que les crédits azote remboursables RNC selon EP4491001 sont supérieurs à 0.00 et que ces itec ne sont pas irrigués.

les doses d'engrais dPK peuvent être exprimées en kg-P₂O₅/ha/an et en kg-K₂O/ha/an, et le P tellurique phyto-disponible en mg-P_{Olsen}/kg de sol et en K en mg-K_NH_{4-acétate}/kg de sol. Les teneurs en P tellurique (mg-P/kg-sol) sont avantageusement obtenues selon Olsen et al. 1954 et en K tellurique dit « échangeable » selon la méthode de l'acétate d'ammonium. Les *pH éventuels* (pHe) atteints lorsque les doses d'engrais N, P et K selon l'invention le sont *sans* chaulage ou l'apport d'amendements visant à modifier le statut acido-basique SAB du sol de la parcelle.

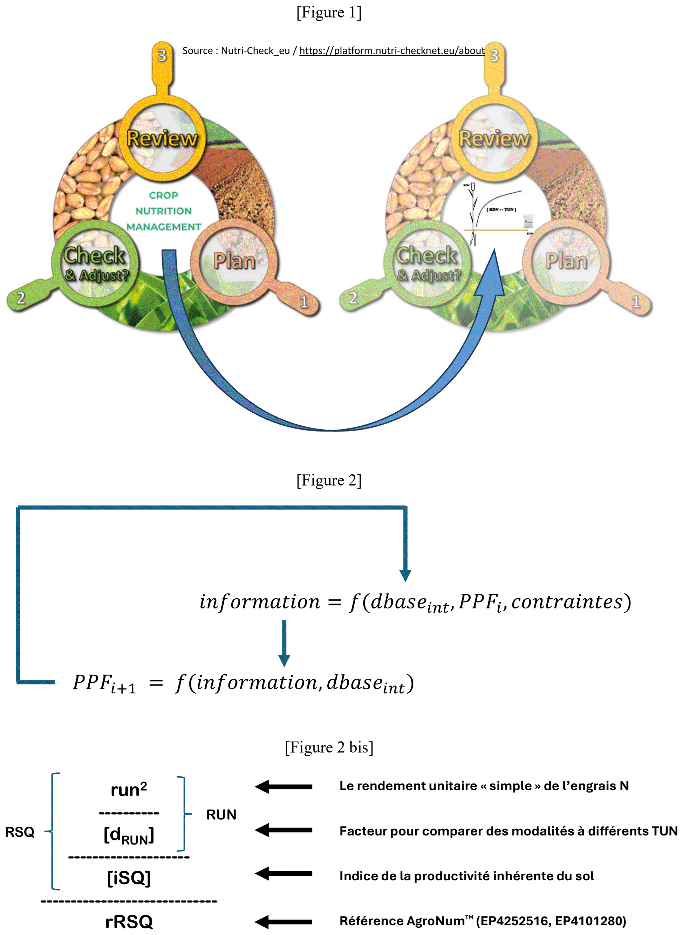

En référence à la Revendication 2, le progrès technique pTec sur parcelles a priori les moins productives sont particulièrement élevés du fait que la courbe de réponse CRP(N) est inférieure à la moyenne environnementale calculée à titre de témoins trt de référence, pTec effectif jusqu'à ce qu'il génère des crédits azote remboursables RNC calculables selon EP4491001. Mieux. Cette apparente moindre productivité a priori socio-économiquement préjudiciable est exprimé par le ratio rARSQ [Tableau 2], à savoir le rapport entre un rendement azotée RDN (kg-Ngrain/kg-Nfertilisant) situe sur la courbe CRP(N) à un taux de fertilisation azoté TUN donnée et un RDN situé sur la courbe moyenne environnementale à ce même TUN est inférieur à 1,00. Notons que la moyenne environnementale est générée pour le calcul de *crédits azote remboursables* (RNC ; [Tableau 2]) fonctions d'un éventuel progrès technique pTec, à savoir et plus particulièrement selon EP4101208 alinéas [0008] et à la figure 1 et la première revendication ainsi que EP4491001 alinéas [0058] à [0060] et EP25206011.6 aux figures 4, 5 et 5-bis.

Les data CLIM contiennent à titre de variables - ou *classificateurs,* des probabilité de transitions markoviennes Pij établies en posant i et j > 1 à savoir i = [1, 2, ... ] et j = [1, 2, ... ] permettant d'obtenir les Pij P11, P12, P21, P22 de séries chronologiques climatiques contenant des historiques et/ou des projections climatiques régionales de modèles climatiques globaux et régionaux pour des variables clés à l'aide de méthodes mathématiques et codes informatiques pouvant générer des Pij.

L'interopérabilité avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations des doses d'engrais N, P et K ainsi que la valeur de pHe, puis intégrant en relayant ces informations, numériquement ou analogiquement, auxdites technologies d'agriculture de précision afin de former, dispenser en vrais, et appliquer au champ ces doses d'engrais N, P et K sur le terrain, et ce - là encore, via toute technologie de communication, à savoir les réseaux cellulaires, le WiFi, les cartes mémoire, *clouds* et clés USB, le téléphone ou la télécopie, ou par activation manuelle, vocale ou écrite.

**Enfin,** toutes les grandes cultures à graines *non-Fabaceae* et notamment le BTH (blé tendre d'hiver, *Triticum aestivum*), BTP (blé tendre de printemps, *T. aestivum*)*,* ORH (orge d'hiver, *Hordeum vulgare*), ORP (orge de printemps, *H. vulgare*), SCL (seigle, *Se-cale cereale*)*,* TRC (triticale, *Triticosecal* spp.), AVN (avoine, *Avena sativa*), CLZ (colza, *Brassica napus*)*,* ZEA (maïs-grain, *Zea mays*) et TSL (tournesol, *Helianthus annus*) sont concernées.

### Mode de réalisation proposé

### Prise en compte de l'information socio-économique

**[****Figure 1****]** L'approche en trois temps proposée par Nutri-Check_eu (https://platform.nutri-checknet.eu/about est parfaitement interopérable avec ces courbes de réponse à l'azote fertilisant selon EP4252516. Celles-ci le sont d'autant plus depuis puisqu'elles sont couplées à des relations empiriques décrivant les besoins agronomiques et seuils telluriques phosphore (P) et potassium (K) selon EP25206011.6. Il s'agit simplement de remplacer - de compléter en sorte, la notion de *« crop nutrient management »* - alias fertilisation raisonnée, par AgroNum^{™}.
**[****Figure 2****]** L'affinement de plans de fertilisation - alias ici PPF, virtuels sans préciser l'année de la campagne génère l'information nécessaire à cet auto-apprentissage par augmentation de la dbase_int. Formellement, ***information*** = ***f*(*PPF, contraintes*)** sachant que cette information va par la suite servir à l'élaboration de plan prévisionnels de fertilisation ***PPF'** =* ***f*(*dbase_int, information*).** Les contraintes, elles, infusent une dose de réalisme et de commensurabilité à ces plans de fertilisation. Intégrés aux conditions initiales, ils modifieront intelligemment l'allure de ces PPFᵢ₊₁ qui suivront une fois l'algorithme ainsi recalibré. Cette information va faire évoluer le calcul de l'indice RSQ en modifiant la contribution d'iSQ [iSQ ; **Figure 2** **bis**] (EP4252516, EP4101280).

L'information socio-économique provenant de la « réalisation virtuelle » (sic) de plans de fertilisation (PPF) AgroNum^{™} contraints de manière à être commensurables à l'état de la technique et donc a priori plus acceptable par l'utilisateur. Une fois intégrée aux dbase_int et/ou dbase_exp [Figure 4] elle fait évoluer intelligemment et progressivement ces PPF en PPF' encore plus durables et représentatifs des attentes collectives et socio-économiques des agriculteurs. Cette notion de contraindre le virtuel pour créer de l'information intégrable à une dbase en développement est nouvelle et contre-intuitive pour la personne du métier habituée à convoiter, plutôt, les quelques data laborieusement remontées de la parcelle agricole.

### Constitution des dbase et mise en œuvre de l'IA collective (caiac)

La dbase_agn, sous-ensemble de la dbase_exp ne comportant plus que des itinéraires techniques aux rendements unitaires ajustés RUN conduisant à la conservation de la matière organique du sol MOS du fait du criblage de dbase_exp de manière à retenir que les itinéraires techniques durables. Les fonctions (relations) [dPK :: TUN], [cPK :: dPK] et [pHe :: TUN] dérivées de modèles de type linéaires de type glm, ou multilinéaires comportant au moins les coordonnées latitude & longitude centroïdes les plus au centre de la parcelle, un quelconque indice de productivité de la parcelle - avantageusement et à titre d'exemple iSQ ; Toth et al. 2013), ou encore la teneur en argile.
**[****Figure 3****]** : Rappel de la composition tripartite de la **dbase_exp** décrite en EP3821688, EP4101280, EP4252516 et EP25206011.6 comportant les données agronomiques AGRO, pédologiques PEDO et climatologiques CLIM, ces dernières ayant ici le plus souvent composées de probabilité de transitions Pij issues de séries temporelles. Notamment et surtout dans le cadre de la présente invention ces bases ne contiennent ***pas*** de données AGRO, PEDO ou CLIM *annualisées* et/ou faisant référence à l'année de récolte ou de la campagne mais comportent les coordonnées GPS les plus au centre de la parcelle. La première tranche comprend les données AGRO des rendements in situ transmises par l'utilisateur, la deuxième tranche les data pédologique PEDO, et la troisième tranche de données climatique CLIM. Ces data PEDO peuvent être télédétectées ou obtenues avec des fonctions de pédo-transfert dans diverses bases de données numériques nationales et internationales et ensuite extraites par rastérisation et/ou vectorisation.
**[****Figure 4****]** : Intelligence artificielle collective (CAIAC) schématisée. **dbase_int** contient les conditions *initiales collectivement* acceptables à titre d'intelligence collective. Ces valeurs sont généralement celles provenant de parcelles agriculteurs ayant sciemment appliqué les technologies de fertilisation raisonnée et/ou d'agriculture de précision ; ils font partie d'un premier collège, de collectif en sorte. **dbase_exp** contient l'ensemble des data expérimentales y compris les témoins et modalités à l'essai confrontées à ce premier jet d'intelligence collective. **dbase_agn** est le résultat de ce criblage à l'aide d'une simple règle heuristique (EP4101280). Lorsque **dbase_tls** contient les plans de fertilisations *virtuels* contraints selon EP25206011.6 (PHK) maintenant intégrables à **dbase_int.** Cette réinsertion de data AGRO virtuels est effectué réitérativement jusqu'à ce que tous les itinéraires techniques de la **dbase_exp** aient été testés.

Au cœur de l'invention réside donc cette *contrainte réaliste* des plan de fertilisation NPKH élaborés selon EP25206011.6. L'information contenue dans ces plans provient de cette contrainte et fait de sorte que lesdits plans sont réalisables, voire probablement réalisés, et peuvent donc ainsi enrichir l'ensemble des bases de données [Figure 4]. Ce sont les contraintes CNTR appliquées au plan de fertilisation NPKH couplés aux courbes de réponses à l'azote CRP(N) qui génèrent de l'information INFO. Celle-ci dans dbase_tls est réintroduite comme nouvelles conditions initiales en dbase_int avant de relancer le criblage réitératif au sens de EP3821688 et EP4252516 assurant ainsi l'auto-apprentissage virtuel et donc autonome de l'IAAgroNum.

Pour faciliter l'application de ces contraintes, il est avantageuse de recourir à des scripts informatiques - en R^{®} par exemple. Ces contraintes par rapport aux doses dPK recommandée, pH telluriques de références, et seuils critiques cPK communément peuvent être exprimées formellement comme suit (cf. EP25206011.6, alinéa [0043]) ;

| | | |
|---|---|---|
| Contrainte 1 : | abs(1-pHwater/esdac_pHwater) | <= 0.10 +/- 20% |
| Contrainte 2 : | abs(1-pHcacl2/esdac_pHcacl2) | <= 0.10 +/- 20% |
| Contrainte 3 : | abs(1-RDP2O5/dP2O5) | <= 0.10 +/- 20% |
| Contrainte 4 : | abs(1-RDK2O/dK2O) | <= 0.10 +/- 20% |
| Contrainte 5 : | abs(1-(available_P/(cP*2*bd))) | <= 0.25 +/- 20% |
| Contrainte 6 : | abs(1-available_K/(cK*2*bd))) | <= 0.33 +/- 20% |
| Contrainte 7 : | abs(1-cP/europe_cP) | <= 0.25 +/- 20% |
| Contrainte 8 : | abs(1-cK/europe_cK) | <= 0.33 +/- 20% |

Ce criblage contraint des itinéraires techniques itec selon leurs *rendements unitaires simples* run étant effectué a posteriori permet de rendre encore plus commensurables les plans de fertilisation, notamment à l'égard d'EUNEP (https://www.eunep.com/).

**[****Figure 5****]** : Expansion graduelle de de la dbase AgroNum^{™} recalibrant à chaque étape l'algorithme d'IA (a) générant la courbe de réponse CRP (EP4252516) par (b) l'intégration de nouvelles données parcellaires client uniquement sur la base des coordonnées latitude LAT et longitude LON de manière à permettre l'affinement par contraintes (c) du plan de fertilisation selon l'approche en EP25165155.0 alinéas [0035] & [0043]. Cette expansion incrémentielle de la dbase_int [Figure 4] par ajouts répétés d'information provenant des itec retenues en dbase_tls, plans de fertilisation a priori virtuels mais contraints et donc réalisable, fait évoluer progressivement et intelligemment dbase_int + dbase_exp ainsi que dbase_agn qui en découle [Figure 4] sans pour autant chambouler les courbes CRP(N) de réponse à l'azote fertilisant.

**[Tableau 1]** : Data AGRO *désaisonnalisées* de **dbase_exp.** Celles-ci sont conjointes aux data PEDO et CLIM à droite du tableau - RHS (*right hand side*) en EP25206011.6. et les data PEDO et CLIM à droite dite RHS (*right hand side*) de **dbase_exp** comprenant l'ensemble des *itinéraires techniques* (itec) expérimentaux. In fine, **dbase_agn** servant à la calibration des CRP(N) ne contient *que* des itec durables au sens d'EP4252516, EP449100 et EP4101280. (CLT : type de grande culture à graine *non-Fabaceae,* ici surtout de blé tendre d'hiver (BTH), RDT : rendement grain 100 MS (quintaux/ha), PRT : % azote des grain, RCS : type de résidus de culture au sol, RDN : rendement azoté (kg-N_{grain}/ha), run : rendement unitaire simple (kg-N_{grain}/kg-N_{fertilisant}). RUN, iSQ et RSQ sont explicités dans le texte. Il est donc possible d'utiliser des Pij au lieu des moyennes climatiques issues des mêmes séries chronologiques, eg. IMERG_Pcal (précipitations ; Bolvin et al. 2019, Huffman et al. 2019a/2019b, etc.).

De telles Pij, en se substituant aux données météorologiques annualisées, vont faciliter la constitution des dbase APC. Par exemple, les données CORDEX (Jacob et al. 2014) permettent de générer des Pij via le module *markovchain* en R^{®} pour de variables de types « Precipitation » (pr ; kg/m2), « Mean surface ait temperature » (tas ; K), « Evaporation » (evspsbl ; kg/m2), « Surface Air Pressure » (ps ; Pa), etc. Des Pij établies en posant i et j > 1 à savoir i = [1, 2, ... ] et j = [1, 2, ... ] permettent d'obtenir les P11, P12, P21, P22, etc. Les Pij sont tributaires de séries chronologiques discrétisées en classes, le nombre de classes discrètes étant établit selon le nombre d'observations. Il existe d'autres bases de données géoréférencées américaines, européennes et internationales contenant de telles séries chronologiques.

Pour générer ces Pij il est avantageux de procéder selon Spedicato et al. 2017 implémentée en R^{®} facilitant l'extraction géospatiale de séries chronologiques climatiques. Pour les séries comportant des pas de temps journaliers ou hebdomadaires, quelques années de data suffisent. Des pas de temps plus courts comportant donc beaucoup plus de relevés peuvent parfois être assez long à traiter.

Des fichiers netCDF contient plusieurs variables extraites par des fonctions *terra* en R^{®} pour la manipulation et l'analyse de données géospatiales. On « discrétise » la série chronologique avec la fonction R^{®} *discretize* pour transformer ces variables continues en variables catégorielles et obtenir les Pij via la fonction *transitionMatrix.* Avantageusement, ces matrices contiennent 5 Pij homogènes [i = j]. Les processus stochastiques markoviens sont implémentés en R^{®} via *markovchain* (Spedicato et al., 2017) et la fonction *markovchainFit.*

**[****Figure 6****]** : La plus grande stabilité temporelle des probabilités de transition Pij d'une série temporelle en comparaison de la moyenne (*mean,* angl.) des valeurs de cette même série temporelle. Ici, des Pij stationnaires P11, P22 et P33 par rapport à leurs valeurs initiales au début de la série temporelle, ici en 1951. Deux sous-ensembles prises aléatoirement parmi les 31 771 que comporte la **dbase_exp** [Figure 4] sont présentées. Le fichier .nc source porte le nom de variable à savoir ici *evspsbl* (data CORDEX, Jacob et al. 2014).

Les data CLIM sous forme de *probabilités de transitions* Pij sont donc souvent plus stationnaires. Les données PEDO sont, elles, avantageusement choisies parmi celles qui n'évoluent peu ou pas travers le temps, par exemple les teneurs en argiles, sables et limons ainsi que les coefficients de la dynamique hydrologique des sols qui leur sont les plus associées. On obtient ainsi une base de données (dbase) temporellement stationnaire qui nécessite peu/pas de mises à jour périodiques.

**[Tableau 1] : Portion des data AGRO dans la dbase exp. À noter l'absence de la variable « année » de semis, récolte (i.e. « campagne »).**

| ***No_dbase*** | ***Itinéraire technique (itec)*** | ***reference*** | ***LAT*** | ***LON*** | ***CLT*** | ***RDT*** | ***PRT*** | ***TUN*** | ***RCS*** | ***RDN*** | ***dRUN*** | ***run*** | ***RUN*** | ***iSQ*** | ***RSQ*** |
|---|---|---|---|---|---|---|---|---|---|---|---|---|---|---|---|
| *1061* | 50N_Torregrossa_BTH_BTH | Abad_et_al._2005 | 41.6495 | 0.83028 | BTH | 39.56 | 2.105 | 50 | BTH | 83 | 3.9598 | 1.6657 | 0.7007 | **5.600** | 0.125121603 |
| *1062* | 100N_Torregrossa_BTH_BTH | Abad_et_al._2005 | 41.6495 | 0.83028 | BTH | 43.69 | 2.368 | 100 | BTH | 103 | 1.4 | 1.0348 | 0.7648 | **5.600** | 0.136583043 |
| *1063* | 150N_Torregrossa_BTH_BTH | Abad_et_al._2005 | 41.6495 | 0.83028 | BTH | 41.19 | 2.509 | 150 | BTH | 103 | 0.7621 | 0.6889 | 0.6228 | **5.600** | 0.111201946 |
| *1064* | 200N_Torregrossa_BTH_BTH | Abad_et_al._2005 | 41.6495 | 0.83028 | BTH | 45.25 | 2.754 | 200 | BTH | 125 | 0.495 | 0.6232 | 0.7846 | **5.600** | 0.140107593 |
| *1065* | 150N_uf_Torregrossa_BTH_BTH | Abad_et_al._2005 | 41.6495 | 0.83028 | BTH | 45.69 | 2.614 | 150 | BTH | 119 | 0.7621 | 0.7962 | 0.8319 | **5.600** | 0.148540323 |
| *1066* | 200N_uf_Torregrossa_BTH_BTH | Abad_et_al._2005 | 41.6495 | 0.83028 | BTH | 44.94 | 2.684 | 200 | BTH | 121 | 0.495 | 0.6031 | 0.7349 | **5.600** | 0.13121559 |
| *1067* | 200_us_Torregrossa_BTH_BTH | Abad_et_al._2005 | 41.6495 | 0.83028 | BTH | 43.88 | 2.737 | 200 | BTH | 120 | 0.495 | 0.6005 | 0.7284 | **5.600** | 0.130086672 |
| *1068* | 50N_Bell-lloc_BTH_BTH | Abad_et_ al. 2005 | 41.6495 | 0.83028 | BTH | 30.6 | 2.877 | 50 | BTH | 88 | 3.9598 | 1.7608 | 0.783 | **5.600** | 0.139816616 |
| *1085* | 200N_Bell-lloc_BTH_BTH | Abad_et_al._ 2005 | 41.6495 | 0.83028 | BTH | 56.31 | 2.807 | 200 | BTH | 158 | 0.495 | 0.7903 | 1.2619 | **5.600** | 0.225315332 |
| *1086* | 150N_uf_Bell-lloc_BTH BTH | Abad_et_al._ 2005 | 41.6495 | 0.83028 | BTH | 57.25 | 2.807 | 150 | BTH | 161 | 0.7621 | 1.0713 | 1.5061 | **5.600** | 0.268919459 |
| *1087* | 200N_uf_Bell_lloc_BTH_ BTH | Abad_et_al._ 2005 | 41.6495 | 0.83028 | BTH | 55.88 | 2.789 | 200 | BTH | 156 | 0.495 | 0.7794 | 1.2272 | **5.600** | 0.219142991 |
| *1088* | 200_us_Bell-lloc_BTH_BTH | Abad_et_al._ 2005 | 41.6495 | 0.83028 | BTH | 50.63 | 2.807 | 200 | BTH | 142 | 0.495 | 0.7106 | 1.0201 | **5.600** | 0.182161749 |
| 1627 | PS+U+R_ORH_ZEA | Abalos_et_al._2013 | 40.52336 | -3.29575 | ORH | 32.4 | 1.346 | 150 | ZEA | 44 | 0.7621 | 0.2907 | 0.1109 | **5.886** | 0.018839309 |
| 1628 | U+R_ORH_ZEA | Abalos_et_al._2013 | 40.52336 | -3.29575 | ORH | 34.6 | 1.422 | 150 | ZEA | 49 | 0.7621 | 0.328 | 0.1412 | **5.886** | 0.023984054 |
| 1629 | PS+U-R_ORH_ZEA | Abalos_et_al._2013 | 40.52336 | -3.29575 | ORH | 30.6 | 1.304 | 150 | ZEA | 40 | 0.7621 | 0.266 | 0.0928 | **5.886** | 0.015773867 |
| *1630* | U-R_ORH_ZEA | Abalos_et_al._2013 | 40.52336 | -3.29575 | ORH | 31 | 1.368 | 150 | ZEA | 42 | 0.7621 | 0.2827 | 0.1048 | **5.886** | 0.01781667 |
| 2569 | Aragon_03_Exp_1_BTH_BTH | Acreche_et_al._2009 | 41.66182 | 0.39551 | BTH | 77.83 | 1.806 | 152 | BTH | 141 | 0.7471 | 0.9245 | 1.1441 | **4.313** | 0.26527022 |
| *2570* | Estrella_Exp_1__BTH_BTH | Acreche_et_al._2009 | 41.66182 | 0.39551 | BTH | 88.88 | 1.581 | 152 | BTH | 141 | 0.7471 | 0.9245 | 1.1441 | **4.313** | 0.26527022 |
| 2571 | Anza Exp_1__BTH_BTH | Acreche_et_al._2009 | 41.66182 | 0.39551 | BTH | 91.52 | 1.535 | 152 | BTH | 141 | 0.7471 | 0.9245 | 1.1441 | **4.313** | 0.26527022 |
| 2572 | ID_2151_Exp_1__BTH_BTH | Acreche_et_al._2009 | 41.66182 | 0.39551 | BTH | 102.93 | 1.365 | 152 | BTH | 141 | 0.7471 | 0.9245 | 1.1441 | **4.313** | 0.26527022 |
| *2573* | Aragon_03_Exp_2__BTH_BTH | Acreche_et_al._2009 | 41.66182 | 0.39551 | BTH | 85.79 | 1.153 | 78 | BTH | 99 | 2.0323 | 1.2675 | 0.7906 | **4.313** | 0.183299602 |
| 2574 | ID_2151_Exp_2__BTH_ BTH | Acreche_et_ al._2009 | 41.66182 | 0.39551 | BTH | 134.55 | 0.735 | 78 | BTH | 99 | 2.0323 | 1.2675 | 0.7906 | **4.313** | 0.183299602 |
| 2575 | Aragon_03_Exp_5__BTH_BTH | Acreche_et_al._2009 | 41.66182 | 0.39551 | BTH | 27.51 | 3.807 | 87 | BTH | 105 | 1.7252 | 1.2037 | 0.8399 | **4.313** | 0.194737897 |
| 2576 | Estrella_Exp_5__ BTH_BTH | Acreche_et_al._2009 | 41.66182 | 0.39551 | BTH | 31.98 | 3.275 | 87 | BTH | 105 | 1.7252 | 1.2037 | 0.8399 | **4.313** | 0.194737897 |
| 2577 | Anza_Exp_5__BTH_BTH | Acreche_et_al._2009 | 41.66182 | 0.39551 | BTH | 31.98 | 3.275 | 87 | BTH | 105 | 1.7252 | 1.2037 | 0.8399 | **4.313** | 0.194737897 |
| *2578* | ID_2151_Exp_5__BTH_BTH | Acreche_et_al._2009 | 41.66182 | 0.39551 | BTH | 30.96 | 3.383 | 87 | BTH | 105 | 1.7252 | 1.2037 | 0.8399 | **4.313** | 0.194737897 |
| *23251* | V1_P0 | Agapie et al. 2023 | 45.95574 | 20.77108 | BTH | 32.19 | 2.12 | 1 | LEG | 68 | 1400 | 68.2424 | 3.3264 | **7.000** | 0.475206649 |
| *23252* | V2_P0 | Agapie et al. 2023 | 45.95574 | 20.77108 | BTH | 38.45 | 2.23 | 30 | LEG | 86 | 8.5201 | 2.8582 | 0.9588 | **7.000** | 0.136975375 |
| 23253 | V3_P0 | Agapie et al. 2023 | 45.95574 | 20.77108 | BTH | 44.72 | 2.35 | 60 | LEG | 105 | 3.0123 | 1.7515 | 1.0184 | **7.000** | 0.145486944 |
| *23254* | V4_P0 | Agapie et al. 2023 | 45.95574 | 20.77108 | BTH | 49.56 | 2.53 | 90 | LEG | 125 | 1.6397 | 1.3932 | 1.1838 | **7.000** | 0.169108133 |
| *23255* | V5_P0 | Agapie et al. 2023 | 45.95574 | 20.77108 | BTH | 49.86 | 2.65 | 120 | LEG | 132 | 1.065 | 1.1011 | 1.1385 | **7.000** | 0.162631953 |
| 23256 | V6_P40 | Agapie et al. 2023 | 45.95574 | 20.77108 | BTH | 35 | 2.14 | 1 | LEG | 75 | 1400 | 74.9043 | 4.0076 | **7.000** | 0.57251573 |
| *23257* | V7_P40 | Agapie et al. 2023 | 45.95574 | 20.77108 | BTH | 38.27 | 2.26 | 30 | LEG | 86 | 8.5201 | 2.883 | 0.9755 | **7.000** | 0.1393627 |
| 23258 | V8_P40 | Agapie et al. 2023 | 45.95574 | 20.77108 | BTH | 46.06 | 2.39 | 60 | LEG | 110 | 3.0123 | 1.8348 | 1.1176 | **7.000** | 0.159654514 |
| 23259 | V9_P40 | Agapie et al. 2023 | 45.95574 | 20.77108 | BTH | 49.92 | 2.53 | 90 | LEG | 126 | 1.6397 | 1.4034 | 1.2011 | **7.000** | 0.171593372 |

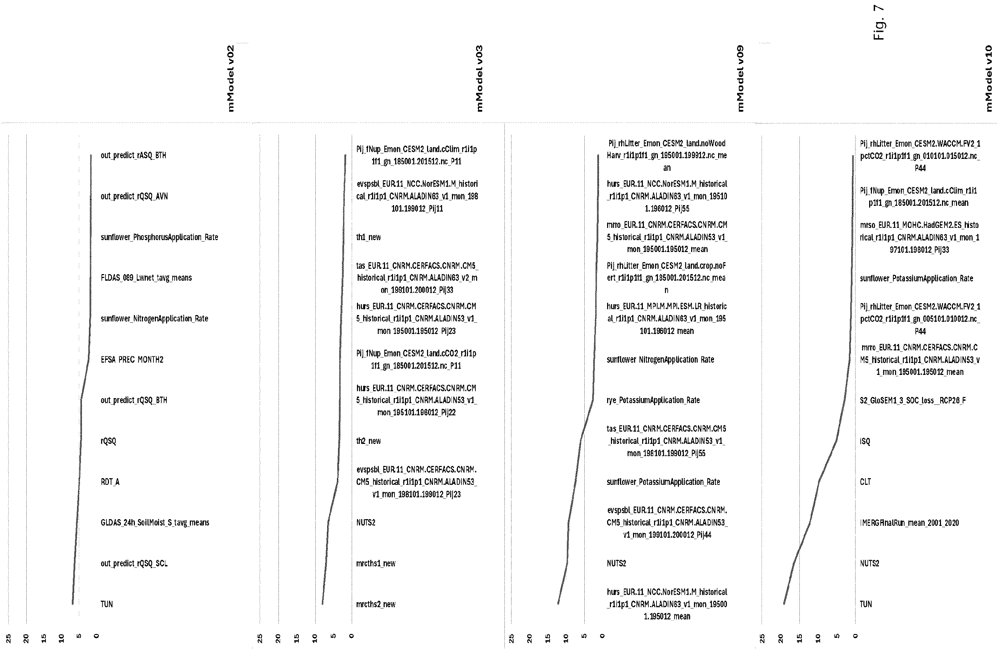

**[****Figure 7****]** : Les variables les plus influentes contiennent des Pij CLIM et de certaines variables PEDO inhéremment peu/pas modifiées à travers le temps et le changement climatique. Les classificateurs les plus influents selon SQT (EP3821688) sont AGRO et CLIM fortement temporelle et affectées par le changement climatique et le potentiel de rendement de la campagne. Les variables les plus influentes avec l'approche conventionnelle RSQ sont très annualisé - rQSQ, rASQ, RDT_A. Les variables les plus influents avec l'approche TLS sont le plus souvent des probabilité de transition Pij plus stationnaires, à l'exception des unité cartographiques NUTS et les taux de fertilisation azotée TUN. L'approche conventionnelle RSQ ne comporte pas de Pij (mModel-v02). Les trois autres approches figurées dites TLS au sens de la présente invention (mModel-v03, v09 & v10), oui. TLS mModel-v03 contient des Pij *hétérogènes* [Pij | j ≠ i & j = i], tandis que TLS mModel-v09 & -v10 ne contiennent que de Pij homogènes [Pij | j = i]. TLS mModel-v10 diffère de -v09 en ce que sa dbase_exp et dbase_int utilisés pour sa calibration contiennent des itinéraires technique itec a priori virtuels mais - une fois ajustés selon EP25206011.6, réalistes voire probablement réalisés du fait de l'application des susdites contraintes. De manière générale, cette expansion de dbase_exp, _int & _agn [Figures 4 & 5] favorise l'influence des taux de fertilisation azotée TUN, des unités cartographiques NUTS2, voire l'indice de productivité iSQ. Cela est raisonnable et souhaitable.

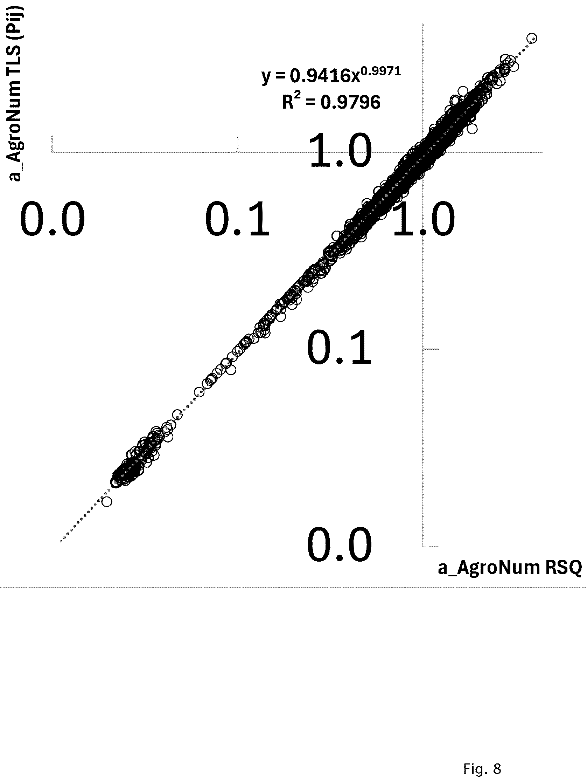

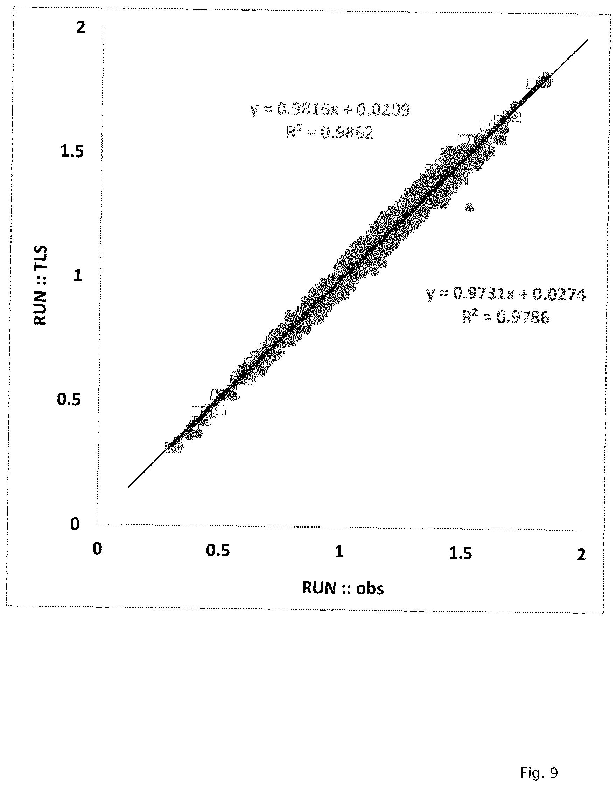

**[****Figure 8****]** : Les courbes de réponse CRP(N) EP4252516 et celles générées via la présente invention sont comparables. Les valeurs d'a_{AgroNum} selon l'invention (TLS) et celles selon EP4252516 (RSQ) les sont. *Idem* pour les valeurs des rendements unitaires ajustés RUN présentés à la **[****Figure 9****]** : Les algorithmes d'IAAgroNum calibrés à l'aide des dbase_tls sont tout aussi validés que ceux calibrés à l'aide de dbase plus conventionnelles ne comportant pas exclusivement les susdites Pij et data PEDO stationnaires. In fine, le pouvoir prédictif deux algorithmes - TLS & RSQ sont très comparables malgré l'utilisation exclusive de Pij et quelques variables PEDO stationnaires [Figure 6]. On en conclut que l'approche TLS selon la présente invention est conservatrice et permet une évolution progressive d'AgroNum^{™} sans chambouler les plans de fertilisation et/ou les attentes de l'agriculteur/trice. Il est donc réellement question de *progrès technique* pTec.

### Création de plans de fertilisation virtuels socio-économiquement réalistes

Les courbes de réponses CRP(N) sont couplées à des fonctions mettant en relation les doses [dPK et TUN], les seuils critiques [cPK et dPK], et enfin les pH telluriques éventuels [pHe et TUN]. Ces valeurs dPK, cPK et pHe sont prédits par le même algorithme d'IA ayant servit à prédire RSQ. L'agriculteur/trice transmet les coordonnées GPS les plus au centre de la parcelle, ainsi que le taux de fertilisation TUN (kg-Nf/ha) souhaité, ou encore l'objectif de de rendement RDN azoté (kg-Ng/ha) envisagé ; il/elle et reçoit dans la foulée un objectif de RDN correspondant au taux de fertilisation-N souhaité, ou encore les doses d'engrais NPK correspondantes audit objectif de rendement RDN. À travers l'Europe, toutes les grandes cultures *non-Fabaceae* sont concernées.

Ceux/celles abonnés à un service de micro-climatologie peuvent actualiser cet objectif de rendement RDN et ajuster dynamiquement les recommandations d'engrais NPK, peu importe l'itinéraire technique.

Si les RDN et TUN obtenus ne sont pas sur la courbe de réponse selon EP4252516, le conseil agricole portera sur la modification de l'itinéraire technique, ou encore le calcul des crédits azote remboursables (RNC ; EP4491001). A cet effet, une courbe à titre de *moyenne environnementale* (*baseline* ; EP4101280) est générée afin d'estimer un certain *progrès technique* pTec. Par rapport à cette moyenne environnementale - dite parfois ASQ, à titre de témoin (trt) et la courbe de réponse à l'azote selon EP252516, on calcul selon EP4491001 la quantité d'azote mobilisée laissée au résidus de culture contribuant à leur humification en matière organique du sol. Cet azote est remboursable puisqu'il n'est pas récolté au profit de la conservation de la matière organique du sol et représente donc un service à l'environnement *rémunérables* (sic)*.*

Les données APC obtenues et traitées selon EP3821688, EP4101280, EP4252516, EP4491001 et EP25206011.6 ainsi que les recommandations d'engrais NPK de tels plans de fertilisations « virtuels » mais réalistes sont ensuite intégrés à la dbase_int [Figure 5]. Pour illustrer le progrès technique pTec réaliste d'itinéraires techniques itec sous contraintes 1 à 8 [0044] a priori virtuels des paramètres calculés sont listés en colonne de gauche **[Tableau 2]** à savoir le type de culture CLT - ici surtout du blé tendre d'hiver BTH, les coefficients aN1 & Na1 des courbes de réponse à l'azote fertilisant (rsq) et de la moyenne environnemental (asq), les teneurs NPK des grains recommandées, ainsi que les rendements en grain RDT, et en N, P & K (RDN, RDP & RDK) des témoins (trt) et des itec à titre de traitements (TRT) comparables. Est aussi indiqué le nombre de *crédits azote remboursables* (RNC ; EP4491001).

Au [Tableau 2] et à titre d'exemple mettant en évidence la dimension socio-économique de l'invention, des ratios - dits rARSQ, sont ici supérieurs 1,00. Cela indique que ces parcelles sont a priori parmi les moins productives, notamment mais pas exclusivement du fait d'iSQ relativement faibles. Du coup les moyennes environnementales à titre de témoin de référence pour le calcul des crédits azote remboursables RNC (EP4491001) est supérieur à la courbe de réponse CRP (EP4252516). L'agriculteur doit donc faire preuve d'une technicité exceptionnelle pour surpasser non seulement CRP mais aussi cette moyenne environnementale reflet d'iSQ. C'est cette réalité socio-économique que prendre en compte la présente invention. Mieux. Puisque cette technicité permettant de dépasser CRP est durable au sens d'EP4491001, elle génère aussi un certain nombre de RNC en sus des gains de productivité du fait de cette louable technicité durables conduisant à la conservation de la matière organique du sol.

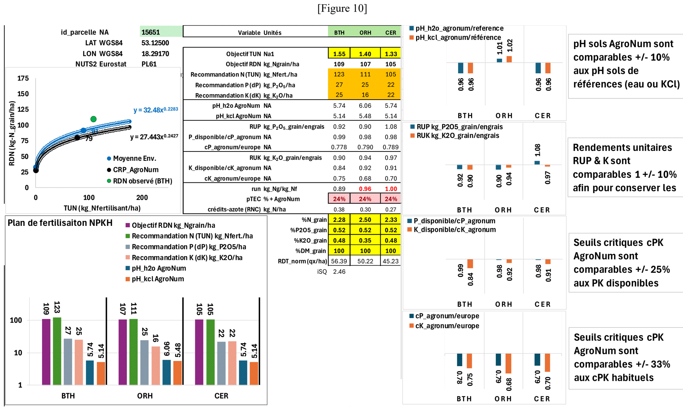

**[****Figure 10****]** A priori selon EP25206011.6 et à titre d'exemple, un tel plan de fertilisation *virtuel* NPKH d'une parcelle en Pologne (NUTS2 PL61) cette fois-ci, de blé tendre (BTH), d'orge d'hiver (ORH) ou de céréales (CER). L'objectif de rendement RDN est fixé par l'agriculteur par rapport au *point de bascule* Na1 lorsque RDN ≡ TUN.Connaissant l'objectif de rendement RDN et son taux de fertilisation-N TUN on établit les doses d'engrais dP & dK, les teneurs critiques cP & cK ainsi que les pH telluriques éventuels (pHe). Ces recommandations NPKH sont contraintes de manière à être commensurables avec celles des *plans prévisionnels de fertilisation* (PPF) actuellement préconisés. Les cellules surlignées en jaune sont dynamiques en conseil agronomique a posteriori, par exemple selon l'approche en trois temp de Nutri-Check_EU (https://platform.nutri-check-net.eu/ [Figure 1]). Les doses PK surlignées en beige sont impératives puisque les disponibilités P & K sont inférieures au seuils cPK AgroNum^{™}. Cet itec durable et bénéficiant d'un certain pTec peut maintenant être ajouté à dbase_int de manière à faire évoluer progressivement la calibration de l'algorithme et la méthode de fertilisation raisonnée.

### Impact sur la calibration de l'algorithme d'IA et la performance agronomique

L'utilisation de Pij et l'intégration de nouveaux itinéraires techniques itec a priori virtuels mais néanmoins réalistes parce que contraints socio-économiquement fait que l'efficacité relative des plans de fertilisation AgroNum^{™} (eAgroNum) par rapport à la moyenne environnementale augmentent que progressivement **[Tableaux 3 & 4].** Ce conservatisme relatif lors de l'évolution des bases de données dbase AgroNum [Figures 3, 4 & 5] est attribuable au fonctionnement réitératif de l'IA collectif - CAIAC, implicite à EP3821688, EP425516, EP4491001 & EP25206011.6 d'une part, et d'autre part à l'intégration progressive de ces nouveaux itec à titre de conditions initiales en dbase_int.

**[Tableau 2] : Quelques un des 2 000 itinéraires techniques (itec) virtuels et contraints retenus pour inclusion dans la base de données dbase_int à titre de conditions initiales. Celles-ci vont maintenant influer sur les prédictions et les plans de fertilisation améliorant tant soit peu eAgroNum du fait d'un certain progrès technique pTec. Les paramètres (CLT, iSQ, LAT, etc.) dans la première colonne à gauche sont mentionnés dans le texte [0044] ainsi qu'en EP4252516 et EP4491001. A noter que les valeurs rARSQ_aN1 et _Na1 sont ici à titre d'exemplesupérieures à 1,00.**

| | numéro de la parcelle (dbase_AgroNum) | | | | | | | | | | |
|---|---|---|---|---|---|---|---|---|---|---|---|
| Paramètre | unités | 1335 | 2046 | 3024 | 3024 | 3215 | 3598 | 3598 | 5649 | 11200 | 17243 |
| CLT | NA | ORH | BTH | CER | CER | CER | CER | CER | ORH | BTH | BTH |
| iSQ | NA | 4.100 | 4.000 | 6.509 | 6.509 | 5.360 | 6.558 | 6.558 | 4.042 | 2.857 | 2.863 |
| LAT | WGS84 | 41.41655 | 41.85944 | 43.36310 | 43.36310 | 48.79790 | 43.56132 | 43.56132 | 41.25177 | 39.62500 | 53.62500 |
| LON | WGS84 | -4.40573 | -4.63411 | -0.31034 | -0.31034 | 3.96435 | -0.14606 | -0.14606 | -2.67291 | -6.29167 | 18.62500 |
| NUTS2 | NA | ES41 | ES41 | FRI1 | FRI1 | FRF2 | FRI1 | FRI1 | ES41 | ES43 | PL61 |
| perc | mm/année | 404 | 426 | 1373 | 1373 | 624 | 1374 | 1374 | 488 | 526 | 605 |
| aN1_asq | kg_Ngrain/UN | 32.39 | 32.04 | 37.82 | 37.82 | 38.42 | 38.93 | 38.93 | 33.78 | 32.27 | 31.74 |
| b_asq | NA | 0.2414 | 0.2434 | 0.2283 | 0.2283 | 0.2350 | 0.2241 | 0.2241 | 0.2347 | 0.2287 | 0.2329 |
| Na1_asq | kg_Ngrain/UN | 97.96 | 97.71 | 110.77 | 110.77 | 117.87 | 112.10 | 112.10 | 99.40 | 90.40 | 90.69 |
| aN1_rsq | kg_Ngrain/UN | 30.08 | 30.09 | 32.20 | 32.20 | 34.04 | 32.65 | 32.65 | 30.16 | 28.24 | 28.92 |
| b_rsq | NA | 0.2506 | 0.2505 | 0.2528 | 0.2528 | 0.2518 | 0.2529 | 0.2529 | 0.2508 | 0.2509 | 0.2445 |
| Na1_rsq | kg_Ngrain/UN | 93.87 | 93.85 | 104.20 | 104.20 | 111.55 | 106.24 | 106.24 | 94.36 | 86.43 | 85.89 |
| Yi | NA | 1.383 | 1.300 | 1.340 | 1.414 | 1.386 | 1.329 | 1.387 | 1.352 | 1.379 | 1.410 |
| pTEC_trt | NA | 1.030 | 1.029 | 1.041 | 1.039 | 1.037 | 1.034 | 1.033 | 1.036 | 1.028 | 1.038 |
| pTEC_TRT | NA | 1.210 | 1.216 | 1.227 | 1.290 | 1.211 | 1.221 | 1.258 | 1.225 | 1.239 | 1.276 |
| pTEC1 | NA | 1.200 | 1.189 | 1.269 | 1.203 | 1.261 | 1.222 | 1.183 | 1.230 | 1.164 | 1.206 |
| N_grain | % | 2.278 | 2.277 | 2.351 | 2.596 | 2.400 | 2.346 | 2.607 | 2.595 | 2.588 | 2.590 |
| P2O5_grain | % | 0.514 | 0.561 | 0.572 | 0.574 | 0.539 | 0.553 | 0.564 | 0.592 | 0.546 | 0.583 |
| K2O_grain | % | 0.529 | 0.529 | 0.550 | 0.558 | 0.573 | 0.518 | 0.556 | 0.595 | 0.518 | 0.541 |
| TUN_trt | UN | 130 | 122 | 140 | 147 | 155 | 141 | 147 | 128 | 119 | 121 |
| TUN_TRT | UN | 130 | 122 | 140 | 147 | 155 | 141 | 147 | 128 | 119 | 121 |
| dP2O5 | UP2O5 | 30.34 | 31.40 | 31.34 | 31.62 | 30.60 | 31.58 | 31.80 | 29.81 | 25.48 | 27.00 |
| dK2O | UK2O | 26.52 | 28.74 | 32.85 | 33.29 | 35.93 | 33.09 | 33.44 | 26.66 | 25.00 | 25.41 |
| cP | UP | 32.12 | 32.24 | 33.08 | 33.13 | 35.91 | 33.21 | 33.26 | 31.91 | 31.87 | 37.02 |
| cK | UK | 287.40 | 287.05 | 243.82 | 242.60 | 241.44 | 237.84 | 236.87 | 289.37 | 298.27 | 147.78 |
| pHwater | NA | 7.688 | 7.326 | 6.675 | 6.809 | 7.064 | 6.568 | 6.676 | 7.804 | 6.956 | 5.667 |
| pHcacl2 | NA | 7.030 | 6.653 | 6.139 | 6.282 | 6.677 | 6.028 | 6.142 | 7.152 | 6.383 | 5.070 |
| RDT_trt | qx/ha 100%MS | 46.03 | 45.30 | 49.68 | 45.55 | 52.36 | 50.33 | 45.72 | 40.61 | 37.20 | 37.46 |
| RDN_trt | kg-Ngrain/ha | 104.8 | 103.1 | 116.8 | 118.2 | 125.6 | 118.1 | 119.2 | 105.4 | 96.3 | 97.0 |
| RDT_TRT | qx/ha 100%MS | 54.09 | 53.53 | 58.55 | 56.52 | 61.12 | 59.44 | 55.68 | 48.03 | 44.83 | 46.04 |
| RDN_TRT | kg-Ngrain/ha | 123.2 | 121.9 | 137.6 | 146.7 | 146.7 | 139.4 | 145.2 | 124.6 | 116.0 | 119.2 |
| RDP2O5 | kg-P205_grain/ha | 27.80 | 30.01 | 33.49 | 32.45 | 32.94 | 32.86 | 31.39 | 28.43 | 24.47 | 26.84 |
| RDK2O | kg-K2O_grain/ha | 28.62 | 28.29 | 32.22 | 31.53 | 35.04 | 30.81 | 30.97 | 28.58 | 23.21 | 24.93 |
| RNC | UN | 2.72 | 2.88 | 3.09 | 5.57 | 2.95 | 3.25 | 4.67 | 2.95 | 3.38 | 4.16 |
| rARSQ_aN1 | NA | 1.077 | 1.065 | 1.175 | 1.175 | 1.129 | 1.192 | 1.192 | 1.120 | 1.143 | 1.098 |
| rARSQ_Na1 | NA | 1.044 | 1.041 | 1.063 | 1.063 | 1.057 | 1.055 | 1.055 | 1.053 | 1.046 | 1.056 |
| run_trt | kg-Ngrain/kg-Nfert | 0.808 | 0.845 | 0.836 | 0.802 | 0.812 | 0.836 | 0.809 | 0.826 | 0.808 | 0.801 |
| run_TRT | kg-Ngrain/kg-Nfert | 0.949 | 0.999 | 0.986 | 0.996 | 0.948 | 0.987 | 0.985 | 0.977 | 0.973 | 0.984 |
| dRUN | kg-Ngrain/kg-Nfert | 0.947 | 1.039 | 0.848 | 0.783 | 0.728 | 0.834 | 0.782 | 0.971 | 1.076 | 1.050 |
| RSQ_trt | NA | 0.168 | 0.172 | 0.127 | 0.126 | 0.169 | 0.128 | 0.127 | 0.174 | 0.212 | 0.213 |
| RSQ_TRT | NA | 0.232 | 0.240 | 0.176 | 0.195 | 0.231 | 0.178 | 0.189 | 0.243 | 0.308 | 0.322 |

**[Tableau 3] : Évolution progressive de la robustesse de l'algorithme CAIAC permettant d'éviter le surapprentissage de l'algorithme et la dérive numérique d'eAgroNum. La CAIAC AgroNum^{™} permet d'augmenter - de doubler en sorte, le nombre d'itinéraires techniques retenus et donc la couverture de la dbase_agn réduisant ainsi le risque de surapprentissage sans pour autant réduire la précision prédictive de l'algorithme (supra).**

| | | | | | *eAgroNum* | | |
|---|---|---|---|---|---|---|---|
| *n_dbase_int* | n_dbase_exp | n_dbase_agn | | dRSQ | ***TUN*** | ***RDN*** | ***RUN*** |
| 90 | 31589 | 3602 | 2387 | 0.0100 | ***1.00*** | ***1.25*** | ***1.46*** |
| 272 | 62596 | 3118 | 2154 | 0.0100 | ***1.10*** | ***1.39*** | ***1.74*** |
| 471 | 32796 | 6414 | 3463 | 0.0175 | ***1.11*** | ***1.39*** | ***1.71*** |
| 588 | 32913 | 6641 | 3248 | 0.0175 | ***1.12*** | ***1.42*** | ***1.77*** |

**[Tableau 4] : Évolution progressive des méta-modèles AgroNum^{™} - version 09 à 10, suite à la recalibration de l'algorithme d'IA à l'aide de nouvelles data d'itinéraires technique (itec) virtuels réalisés sous contraintes. Malgré un apport appréciable de nouvelles itec à titre de conditions initiales (n_idata) et du coup la modification du pas (datastep) de la CAIAC réitérative l'efficacité agronomique (eAgroNum) évolue intelligemment sans perte notable de précision (%R²) de l'algorithme d'IA et son métamodèle (glm3way & loocvalid), cela malgré une forte augmentation du nombre d'itec retenus (n_itec) pour la calibration d'AgroNum assurant ainsi une meilleure couverture géographique de la SAU et un moindre risque de surapprentissage.**

| | **mModel_v09** | **mModel_v10** |
|---|---|---|
| **dRSQ** | **0.01** | **0.0175** |
| **n_idata** | **272** | **588** |
| **n_itec_RNC_RothC [****Figure 12****]** | **232** | **295** |
| **RNC moyen [****Figure 12****]** | **15** | **13** |
| **idata_aléatoire** | **Non** | **Oui** |
| **datastep/n_step** | **500/60** | **2501128** |
| **eAgroNum_TUN** | **108%** | **112%** |
| **eAgroNum_RDN** | **136%** | **142%** |
| **eAgroNum_RUN** | **167%** | **177%** |
| **R²_catboost** | **98%** | **96%** |
| **R²_glm3way** | **98%** | **96%** |
| **R²_loocvalid** | **98%** | **95%** |
| **n_itec_Model** | **3139** | **6641** |
| **% dbase_exp** | **10%** | **20%** |

Comme nous l'avons vu aux Figures 8 & 9, cette utilisation de probabilités de transition Pij climatiques comme classificateurs (variables) donne des prédictions par IA_catboost somme tout comparables à celles obtenues précédemment. Mieux. L'augmentation progressive d'eAgroNum est attribuable aux nouveaux itinéraires techniques (dbase_tls) à titre de conditions initiales en dbase_int socio-économiquement d'autant plus réalistes du fait qu'ils teintent mieux compte de la technicité des agriculteurs/trices sur parcelles a priori les moins productives dont les progrès techniques sont nécessairement pTec > 1.

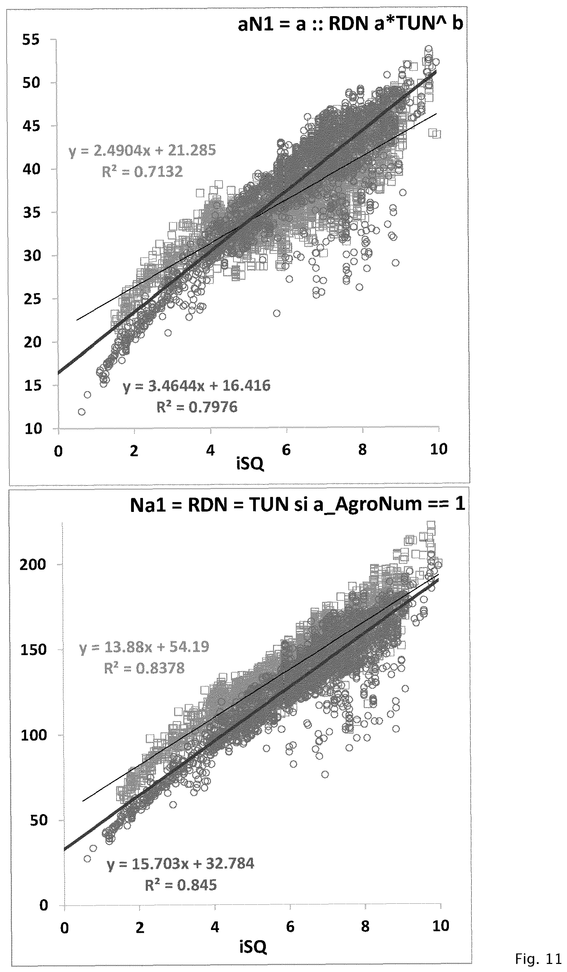

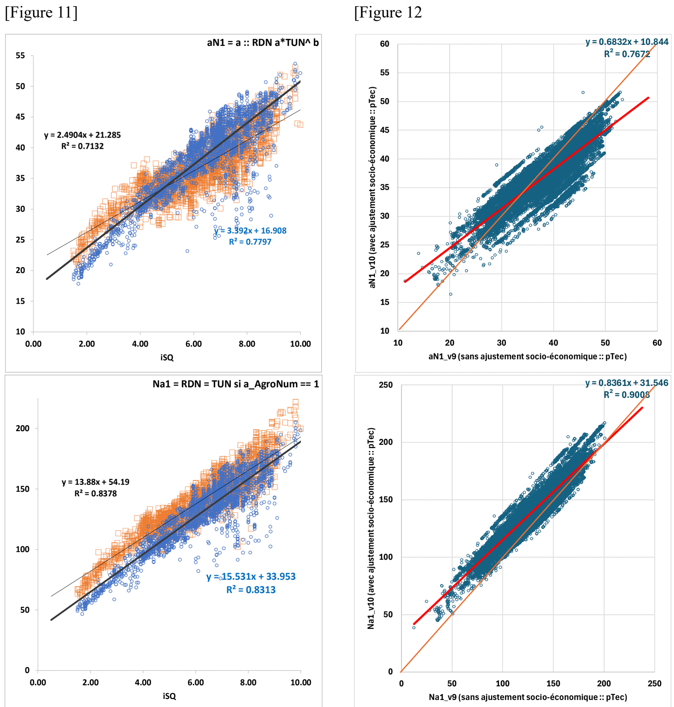

**[****Figure 11****]** : Ajustement socio-économique de la racine (aN1) et point de bascule (Na1) de la version 10 (carrés) par rapport à la version 09 (cercles) du modèle AgroNum en apportant à dbase_int les data des itinéraires techniques virtuels contraints mais bénéficiant d'un certain progrès technique pTec, notamment sur les parcelles iSQ les plus faibles, par exemple ici à la [Figure 10]. On remarque une augmentation des RDN - aN1 et Na1, faisant légèrement basculer la relation RDN = f(iSQ). A noter que aN1 est aussi du coup légèrement diminué sur les parcelles avec iSQ plus élevés. Cela est cohérent du fait que socio-économiquement il est aussi défendable de réduire légèrement les objectifs de rendements les plus élevés du fait de bénéfices marginaux décroissants.
**[****Figure 12****]** : À travers la SAU européenne sur plus de 40 000 parcelles on observe ce basculement au profit des rendements azotés RDN ≡ aN1 & RDN ≡ Na1 prédits par AgroNum v_10 par rapport à v_09. Notons que - pour RDN ≡ aN1 du moins, ce basculement entraine une toute relative minoration des RDN associés au valeurs iSQ les plus élevées. Encore une fois, cela est aussi socio-économiquement défendable.

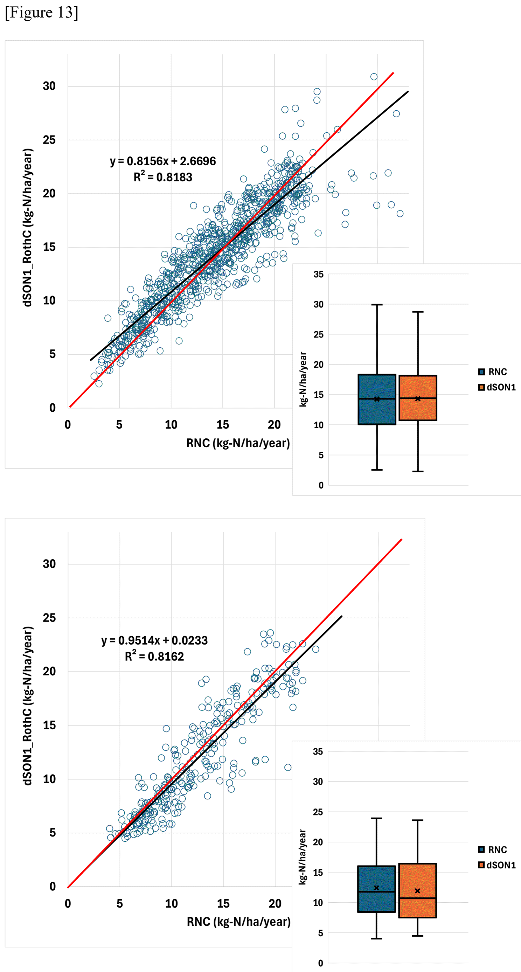

**[****Figure 13****]** : L'ajustement socio-économique par *autoapprentissage autonome contraint* (AAAC) - malgré une augmentation d'eAgroNum (Tableaux 3 & 4) ne chamboule pas le calcul des *crédits azote remboursables* (RNC ; EP4491001) et/ou leurs estimations à l'aide du modèle Roth-C^{®} (https://www.rothamsted.ac.uk/rothamsted-carbon-model-rothc) ; haut - version 09 sans AAAC, bas - version 10 avec AAAC. Cela aurait remis en question le mode de calcul des RNC et la rémunération des agriculteurs sur les parcelles supposément a priori les moins productive du fait d'iSQ - au sens de Toth et al. 2013, les plus faibles.
**[****Figure 14****]** L'interaction entre l'utilisateur et la base de données agro-pédoclimatique est réalisée par interopérabilité d'une intelligence artificielle IA et une technologie d'agriculture de précision et/ou de fertilisation raisonnée constitué d'une courbe de réponse à l'azote fertilisant (EP4252516 ; [Figure 1]). L'utilisateur obtient les recommandations de doses d'engrais et relaye ces informations, digitalement ou analogiquement, aux technologies d'agriculture de précision et/ou de fertilisation raisonnée. Il en résulte une meilleure interopérabilité des bases de données et l'utilisateur, et une plus grande ergonomie. Du fait d'un *auto-apprentissage autonome contraint* (AAAC) les plan de fertilisation NPKH a priori virtuels sont ainsi intégrées à dbase_int orientant l'évolution de l'algorithme vers une meilleure prise en compte des contraintes socio-économiques et réglementaires des agriculteurs/trices, notamment sur les parcelles a priori moins productives.

### Sigles et définitions

**CAIAC** : intelligence artificielle collective est une implémentation de l'IA qui comporte ici une rétroaction continuelle ne nouvelle conditions initiales et/ou expérimentales appliquées à la calibration d'un quelconque algorithme prédictif, ces nouvelle conditions étant elles collectivement reconnues ou reconnaissables comme commensurables avec l'état de la technique et la réglementation.
**cNPKH** (cP ou cK selon le cas) : seuils critiques élémentaires du sol en N, P, K & H déterminant rendant l'application des dNPKH impérative. Pour le moment, seuls les seuils cP & cK sont notées ainsi.
**Commensurable** : Ce que l'on peut évaluer, comparer au moyen d'une même unité. S'applique ici au recommandations, seuils et teneur NPKH telluriques compris à l'intérieure des contraintes appliquées pour la rétention des itinéraires techniques (itec) virtuels mais donc réalisables, voire réalisés.
**cPK** (cP ou cK selon le cas) : teneurs en P & K du sol à titre de seuils critiques rendant l'application des dPK impérative généralement et avantageusement ici exprimés en mg-P & K par kg de prélèvement de terre analysée ;
**data AGRO** sont les données sur les rendements RDT et taux de fertilisation N, P et K de grandes cultures non-*Fabaceae* à graines telles que les céréales, le maïs et le colza ;
**data CLIM** sont les données climato-spatio-temporelles et donc météorologique avantageusement sous forme de séries temporelles de température, humidité, précipitations, etc. ;
**data PEDO** sont les données physico-chimiques sur les sols arables à travers la SAU européenne, y compris donc leurs teneurs et/ou stockes en C, N, P et K, leurs pH, porosités, etc. ;
**dNPKH** (d*P* ou d*K*, voire dP₂O₅ ou dK₂O) : niveaux de fertilisation en N, P, K & H recommandés. Dans le cadre de la présente invention, seules les doses d'engrais P & K recommandées apportées au sol à titre de matière fertilisante sont notées ainsi, généralement en équivalant P₂O₅ et K₂O, respectivement par hectare et par année, tandis que dN est analogue à TUN. dH est peu usité ; voir plutôt ici la notion de pHe (pH tellurique éventuel).
**dPK** (dP ou dK selon le cas) les dP₂O₅ ou dK₂O, i.e. les niveaux de fertilisation en P & K recommandées apportées au sol à titre de matière fertilisante généralement en équivalant P₂O₅ et K₂O, respectivement par hectare et par année ;
**IA** ou **intelligence artificielle** : algorithmes prédictifs permettant aux ordinateurs et aux machines de simuler l'apprentissage, la compréhension, la résolution de problèmes, la prise de décision, la créativité et l'autonomie de l'être humain, et aussi une série de concepts imbriqués ou dérivés, à savoir l'IA comme telle, l'autoapprentissage (machine leaming), le « deep learning » et enfin l'IA générative (source ; https://www.ïbm.com/fr-fr/think/topics/artificial-intelligence).
**Information** : données chiffrés inédites sur les rendements et les taux de fertilisation NPK correspondants générés par la contrainte des plans de fertilisation virtuels NPKH modifiant les conditions initiales de manière à les rendre encore plus commensurables avec l'état de la technique actuellement pratiquée par le conseil agricole.
**iSQ** : indices de productivité de la parcelle représentant son caractère agro-pédo-climatique, eg. sqicrop1 - "crop pro-ductivity index" de Tóth et al. 2013 intégrant le potentiel de production de biomasse aérienne à travers le temps indépendamment du taux de fertilisation et des pratiques culturales, y compris du type de culture agronomiques..
**itinéraire technique** : implémentation d'une pratique culturale combinant un ensemble cohérent d'intrants et d'outils en vue d'atteindre l'objectif de rendement selon le niveau de fertilisation préconisé (nb.).
**KfUE, alias RUK** : rendement potassique par unité de fertilisation azotée TUN. Nb. Pour ne pas inutilement charger la symbologie nous utilisons ici le sigle anglophone KfUE.
**Opérateur** : interface ou module interopérable avec l'utilisateur transmettant à l'utilisateur des préconisations concernant les objectifs de rendements azotés RDN et leurs doses de fertilisation azotées TUN correspondantes.
**PfUE, alias RUP** : rendement phosphorique RDP par unité de fertilisation azotée TUN. Nb. Pour ne pas inutilement charger la symbologie nous utilisons ici le sigle anglophone PfUE.
**pHe** : pH tellurique *éventuel* à un niveau de fertilisation azotée tel que recommandé *sans* pour autant avoir à recourir à des amendements ou au chaulage.
**Pij** : probabilité de transitions d'un processus markovien de passer qu'un système pas d'un état à un autre, soit la probabilité Pij est la probabilité de passer de l'état i à l'état j au prochain pas de temps.
**pTec** : l'amélioration de la performance agronomique attribuable à une certaine modification de la pratique culturale. L'amélioration est appréciée par rapport à la courbe de réponse à l'azote, CRP, des rendements azotés durables, RDN selon le taux de fertilisation, TUN.
**R/LHS** dbase tabulaire et la base de donnée comprenant deux parties, une à gauche (*left hand side,* LHS) et l'autre à droite (*right hand side,* RHS) affichant l'ensemble des itinéraire technique à titre d'observation, une par ligne, et leurs data AGRO, PEDO et CLIM associés ;
**rRSQ** est simplement RUN divisé par une certaines valeur iSQ indiquant le potentiel agronomique de la parcelle, ici et avantageusement selon Toth et al. 2017_bis ;
**rRSQ** : référence agro-environnementale durable par rapport à RSQ observées selon EP4101280 permettant d'établir la durabilités d'une pratique culturale selon l'équation 2.
**rTSQ, rQSQ et rASQ** : référence agronomique de la parcelle obtenue par IA ou méta-modélisation de données agro-pédo-climatiques georéférencées à comparer à TSQ, QSQ et ASQ, respectivement, en termes de RDT (rTSQ_rdt, rQSQ_rdt et rASQ_rdt, mais aussi rTSQ_rdn et rTSQ_run avec TSQ ; cf. EP3821688 et EP4101280.
**RUN** : rendement unitaire de l'azote fertilisant en termes de de RDN exprimé en kg-Ng/kg-N_fertilisant (Nf). RUN = run²/d_RUN, sachant que d_RUN = [ 1400 · TUN-1,5 ], TUN de le taux de fertilisation azotée (kg-Nf/ha), et run = RDN/TUN. Selon EP4252516 *RUN* = (*run*^2)/(1400 *x TUN*^(*-*1.5) ),
**run** : rendement unitaire *simple* de l'N-fertilisant→ RDN/TUN, analogue en sorte à l'efficience de l'azote fertilisant, alias *nitrogen fertiliser use efficiency* (NfUE - EUNEP 2016 / https://www.eunep.com/)
**Série chronologique** : données à intervalles de temps réguliers. Elles sont largement utilisées dans divers domaines tels que l'économie, la météorologie, la finance, et bien d'autres, pour analyser des tendances, des cycles et des prévisions.
**unité cartographique locale** : délimitation du territoire, avantageusement numérique - raster ou vecteur, et ici de type NUTS (nomenclature des unités territoriales statistiques) de niveaux 2 ou 3 (NUTS2 ou 3) facilitant les comparaisons entre pays, ou entre régions, d'un même ensemble (Eurostat 2022 ; https://ec.europa.eu/eurostat/).

### Références

Adam et al. 2018. Gradient boosting in Markov-switching generalized additive models for location, scale and shape. http://arxiv.org/abs/1710.02385
Agnolucci et al. 2020. Long-run trend in agricultural yield and climatic factors in Europe. Climatic Change, 159(3), 385-405. httns://doi.org/10.1007/s10584-019-02622-3
Azimi et al. 2020. Probabilistic Analysis of Long-Term Climate Drought Using Steady-State Markov Chain Approach. Water Resources Management, 34(15), 4703-4724. https://doi.org/10.1007/s11269-020-02683-5
Balderas et al. 2025. A comparative study of deep reinforcement learning for crop production management. Smart Agricultural Technology, 10. https://doi.org/10.1016/j.atech.2025.100853
Bazzi et al. 2017. Time-Varying Transition Probabilities for Markov Regime Switching Models. Journal of Time Series Analysis, 38(3), 458-478. https://doi.org/10.1111/jtsa.12211
Beegle et al. 2000. Nutrient Management Planning: Justification, Theory, Practice. J. Environ. Qual. 29:72-79
Bergez et al. 2019. Agroecological Transitions: From Theory to Practice in Local Participatory Design. Springer (eds) / ISBN 978-3-030-01952-5 ISBN 978-3-030-01953-2 (eBook) / https://doi.org/10.1007/978-3-030-01953-2
Boizard et al. 2025. Agriculture de conservation des sols et transition agroécologique. Notes Académiques de l'Académie d'agriculture de France, 2025, 19 (2) : 1-13. Hal-04912126, 1-13. https://hal.science/hal-04912126vl
Bolvin et al. 2019. Global Precipitation Measurement (GPM) Integrated Multi-satellitE Retrievals for GPM (IMERG) Prepared for: Global Precipitation Measurement (GPM) National Aeronautics and Space Administration (NASA). https://pmm.nasa.gov/sites/default/files/imce/times_allsat.jpg
Bonny et al. 1993. Perspectives d'évolution de l'emploi des engrais et des phytosanitaires dans I'agriculture ftançaise. http://ageconsearch.umn.edu
Boulaine et al. 1995. Quatre siècles de fertilisation. Étude et Gestion Des Sols, 2, 4, 1995*.*
Chaudhari et al. 2025. Agricultural Machine learning platform: Enhancing crop suggestion and crop yield estimates. Journal of Integrated Science and Technology, 13(1). https://doi.org/10.62110/sciencein.jist.2025.v13.1017
Chen et al. 2015. Efficient Second-Order Gradient Boosting for Conditional Random Fields. Proceedings of the 18th International Con- Ference on Artificial Intelligence and Statistics (AISTATS)*.*
Colin et al. 2017. Using Boosted Regression Trees and Remotely Sensed Data to Drive Decision-Making. Open Journal of Statistics, 07(05), 859-875. https://doi.org/10.4236/ojs.2017.75061
Cristofari et al. (2018). Une analyse pragmatiste des processus d'apprentissage en agroécologie : le cas de l'agriculture de conservation. https://hal.science/tel-02046064vl
Dietterich et al. 2008. Gradient Tree Boosting for Training Conditional Random Fields. J. ML Res. (Vol. 9).
EUNEP 2016. Nitrogen use efficiency (NUE) - guidance document for assessing NUE at the farm level. Wageningen University, Alterra, PO Box 47, NL-6700 Wageningen, Netherlands.
Ewert et al. 2023. Agroecology for a Sustainable Agriculture and Food System: From Local Solutions to Large-Scale Adoption. Annu. Rev. Resour. Econ. 2023. 15:351-381
Gómez-Zamanillo et al. 2025. Reducing annotation effort in agricultural data: simple and fast unsupervised coreset selection with DINOv2 and K-means. Frontiers in Plant Science, 16. https://doi.org/10.3389/fpls.2025.1546756
Guyot et al. 1985. Correction par la fertilisation minérale des effets de l'ennoyage sur le blé d'hiver. I.-Expérimentation sur sol Expérimentation sur sol. Agronomie, 1985, 5 (8), Pp.743-750. https://hal.science/hal-00884807vl
Hossen et al. 2025. Transfer learning in agriculture: a review. AI Review, 58(4). https://doi.org/10.1007/s10462-024-11081-x Hlisnikovsky et al. 2020. The effect of mineral fertilisers and farmyard manure on grain and straw yield, quality and economical parameters of winter wheat. Plant, Soil and Environment, 66, 2020 (6): 249-256 / https://doi.org/10.17221/60/2020-PSE
Hu et Zhao 2006. Gradient boosting learning of hidden markov models. ICASSP 2006*.*
Huan et al. 2025. A Unified Self-Supervised Framework for Plant Disease Detection on Laboratory and In-Field Images. Electronics 14(17). https://doi.org/10.3390/electronics14173410
Huffman et al. 2019a. V06 IMERG Release Notes. https://pmm.nasa.gov/data-access/downloads/gpm
Huffman et al. 2019b. Integrated Multi-satellite Retrievals for GPM (IMERG) Technical Documentation*.*
Huzsvai et al. 2025. Discrete-Time Markov Chain Method for Predicting Probability of Crop Yield Variability. Earth, 6(4), 142. https://doi.org/10.3390/earth6040142
ISGP et al. 2016. Socioeconomic Contexts of Sustainable Agriculture. Institute on Science for Global Policy (ISGP) / Tucson, AZ Office, 13630 E. Sahuaro Sunset Rd., Tucson, AZ 85749 / www.scienceforglobalpolicy.org / ISBN: 978-0-9861007-8-9
Jacob et al. 2014. EURO-CORDEX: New high-resolution climate change projections for European impact research. Regional Environmental Change, 14(2), 563-578. https://doi.org/10.1007/s10113-013-0499-2
Jurafsky et al. 2025. Speech and Language Processing An Introduction to Natural Language Processing, Computational Linguistics, and Speech Recognition with Language Models Third Edition draft*.*
Khot et al. 2011. Leaming Markov Logic Networks via Functional Gradient Boosting. ICDM 2011*.*
Kumar et al. 2024. A Comparative Study of Detrending Methods on Crop Yield Time Series for Drought Studies. Asian Research Journal of Agriculture, 17(3), 191-204. https://doi.org/10.9734/arja/2024/v17i3488
Laurent, F. (2015). L'Agriculture de Conservation et sa diffusion en France et dans le monde. CyberGeo, 2015, 1599-1607. https://doi.org/10.4000/cybergeo.27284
Li et al. 2024. Global de-trending significantly improves the accuracy of XGBoost-based county-level maize and soybean yield prediction in the Midwestern United States. GIScience and Remote Sensing, 61(1). https://doi.org/10.1080/15481603.2024.2349341
Lu et al. 2017. Detrending crop yield data for spatial visualization of drought impacts in the United States, 1895-2014. Version of Record: https://www.SciencedirectCom/Science/Article/Pii/S0168192317300333
MDPI et al. 2023. Socio-Economic Functions Across Sustainable Farming Systems. Reprint of articles from the Special Issue published online in the open access journal Sustainability (ISSN 2071-1050) (available at: www.mdpi.com/journal/sustainability/special issues/socio economic sus farming).
Meynard et al. 2019. 50 ans de méthode du bilan : progrès passés et limites actuelles. Agronomie, Environnement & Sociétés 9(1) pages 45 à 54.
Mizutani et al. 2017. Improving the estimation of markov transition probabilities using mechanistic-empirical models. Frontiers in Built Environment, 3. https://doi.org/10.3389/fbuil.2017.00058
Monjardino et al. 2019. Yield potential determines Australian wheat growers' capacity to close yield gaps while mitigating economic risk. Agronomy for Sustainable Development (2019) 39: 49 / https://doi.org/10.1007/s13593-019-0595-xMorel et al. 1992. La fertilisation phosphatée raisonnée de la culture du blé. Agronomie, 12(12), 565-579. https://hal.science/hal-00885501v1
Mortazavi et al. 2025. A practical data-driven approach for precise stem water potential monitoring in pistachio and almond orchards using supervised machine learning algorithms. Computers and Electronics in Agriculture, 231. https://doi.org/10.1016/j.compag.2025.11000
Olsen et al. 1954. Estimation of available phosphorus in soils by extraction with sodium bicarbonate. USDA Circ. 939.
Pan et al. 2020. Economically Optimal Wheat Yield, Protein and Nitrogen Use Component Responses to Varying . /N Supply and Genotype. / Front. Plant Sci. 10:1790. / doi: 10.3389/fp1s.2019.01790
Rankin, R. W. (2016). EM and component-wise boosting for Hidden Markov Models: a machine-learning approach to capture-recapture. Https://Www.Biorxiv.Org/Content/10.1101/052266v8. https://doi.org/10.1101/052266
Ravier et al. 2016. Mismatch between a science-based decision tool and its use: The case of the balance-sheet method for nitrogen fertilization in France. Wageningen J. Life Sci. (2016), http://dx.doi.org/10.1016/i.nias.2016.10.001
Reddy et al. 2025. Leveraging Machine Learning Techniques in Agriculture: Applications, Challenges, and Opportunities. International J. Exp.. Agric. , 47 : 43-57 / https://doi.org/10.9734/jeai/2025/v47i13201
Schut et al. 2020. Soil-based, field-specific fertilizer recommendations are a pipe dream. Geoderma 380 : 114680 / https://doi.org/10.1016/j.geoderma.2020.114680
Sharifmousavi et al. 2024. Distributed Artificial Intelligence Application in Agri-food Supply Chains 4.0. Procedia Computer Science, 232, 211-220. https://doi.org/10.1016/j.procs.2024.01.021
Shen et al. 2013. Hidden markov models for real-time estimation of corn progress stages using MODIS and meteorological data. Remote Sensing, 5(4), 1734-1753. https://doi.org/10.3390/rs5041734
Spedicato et al. 2017. Discrete Time Markov Chains with R. The R Journal, 9/2*.*
Toth et al. 2013. Continental-scale assessment of provisioning soil functions in Europe. Ecological Processes 2:32 / http://www.ecologicalprocesses.com/content/2/1/32
Vankeerberghen et al. 2014. Sustainable Agriculture and Soil: comparative study of strategies for managing the integrated quality of agricultural soils in different regions ofEurope*.*
Wang et al. 2015. Artificial intelligence-based techniques for emerging heterogeneous network: State of the arts, opportunities, and challenges. IEEE Access, 3, 1379-1391. https://doi.org/10.1109
Wu et al. 2007. On the trend, detrending, and variability of nonlinear and nonstationary time series. www.cru.uea.ac.uk/
Xu et al. 2017. Incorporation of satellite remote sensing pan-sharpened imagery into digital soil prediction and mapping models to characterize soil property variability in small agricultural fields. ISPRS Journal of Photogrammetry and Remote Sensing, 123, 1-19. https://doi.org/10.1016/j.isprsjprs.2016.11.001
Yang et al. 2025. Integrating UAV remote sensing and semi-supervised learning for early-stage maize seedling monitoring and geolocation. Plant Phenomics, 7(1). https://doi.org/10.1016/j.plaphe.2025.100011
Ye et al. 2015. Performance of detrending models of crop yield risk assessment: evaluation on real and hypothetical yield data. Stochastic Environ. Res. Risk Assessment 29(1) : 109-117. https://doi.org/10.1007/s00477-014-0871-x
Zahm et al. 2023. La méthode IDEA4 - Indicateurs de durabilité des exploitations agricoles. Principes & guide d'utilisation / Évaluer la durabilité des exploitations agricoles. / ISBN : 979-10-275-0544-9 / Educagri éditions - BP 87999 - 21079 Dijon Cedex / TΘl. 03 80 77 26 32 / 03 80 77 26 34 / editions@educagri.fr
Zhu et al 2019. Stochastically modeling the projected impacts of climate change on rainfed and irrigated US crop yields. Environmental Research Letters, 14(7). https://doi.org/10.1088/1748-9326/ab25al

## Revendications

1. **Méthode de fertilisation raisonnée** pour la préparation de plans de fertilisation au niveau de la parcelle agricole comprenant *apprentissage automatique* (AA) d'un algorithme d'*intelligence artificielle* (IA) à partir de conditions initiales contenues dans une quelconque base de données **dbase_int** applicable à une quelconque base de données expérimentales **dbase_exp** contenant de l'information sur un ensemble *d'itinéraires technique* (itec) mais aussi est surtout le criblage réitératif de dbase_exp à titre *d'intelligence artificielle collective (CAIAC)* ainsi que ;
✔ un mode d'appréciation de la performance agronomique ;
✔ des courbe de réponse des rendements azotés RDN à l'azote fertilisant dites CRP(N) ;
✔ des plans de fertilisations N, P, K & H *candidats* dits NPKH et placés en dbase**_tls** ;
✔ une mesure quantitative du progrès technique pTec associé à la performance agronomique ;
✔ des contraintes applicables lors de la réalisation *virtuelle* desdits plans de fertilisations ;
et **caractérisée en ce que** l'information provenant de l'application desdites contraintes aux dits plans de fertilisation est par la suite introduite dans la **dbase_int** contenant les conditions initiales pour ladite calibration réitérative de l'algorithme sachant que ;
• du fait de la calibration réitérative à titre *d'intelligence artificielle collective* (CAIAC) seules les data agro-pédoclimatiqus des itinéraires techniques les plus durables conduisant à la conservation de la matière organique du sol sont retenus dans la **dbase_agn** pour la calibration de l'algorithme générant les courbes de réponse à l'azote fertilisant CRP(N),
• procéder sans prélèvements de sols de la parcelle simplifie la préparation des plans de fertilisation, l'échantillonnage - s'il y a, étant, lui, limité aux rendements agronomiques, tandis que la taille des doses d'application d'engrais NPK étant simplement relevés et transmis par l'agriculteur, sans échantillonnage,
• l'agriculteur/trice n'est plus obligé/e de de transmettre les détails de ses pratiques culturales - y compris l'année du semis, culture & récolte, seules le coordonnées GPS au centre de la parcelle, voire l'objectif de rendement azoté RDN étant transmis pour fin de conseil agricole effectué donc sans remontée d'informations détaillées de l'itec sur la parcelle,
et donc in fine aussi **caractérisée en ce que** le susdit AA contraint (AAC) est ainsi rendu *autonome* (AAAC) lorsque le conseil agricole est ainsi réalisé virtuellement du fait de l'application des susdites contraintes aux plans de fertilisations candidats réalisés virtuellement selon l'état de la technique rendant du coup facultatif la remontée de données agriculteur de la parcelle.

2. **Méthode de fertilisation raisonnée** selon la première revendication **caractérisée en ce qu'**il est entendu que ;
• le mode d'appréciation de la performance agronomique pour grandes cultures *non-Fabaceae* au niveau de la parcelle est selon EP4252516 et EP4491001 et la formule **(run²)/d**_{RUN}**/iSQ** = **RUN/iSQ = RSQ** sachant que le rendement unitaire simple, run (kg-N_{grain}/kg-N_{fertilisant}) ajusté selon un rendement standard empirique, d_RUN, et un indice de la productivité inhérente de la parcelle, iSQ, et que l'algorithme d'IA calcul la référence rRSQ pour la parcelle, et la durabilité entant que **Durabilité = RSQ/rRSQ ≈ 1.00,** les RUN réputés durable servent au rétro-calcul du besoin unitaire de la pratique culturale ou l'itinéraire technique en question, a_AgroNum pour estimer la dose prévisionnelle d'engrais azotée correspondante, TUN (kg-Nf/ha) = [a_AgroNum · RDN] lorsque **qu'a_AgroNum** = 1/√(**RUN x dRUN)** de manière à rétro-calculer l'objectif de rendement durable, RDN (kg-Ng/ha) correspondant = [TUN/a_ AgroNum ], mais aussi ;
• d_{RUN} est perfectible par compilation, voire méta-analyse, tandis que les parcelles aux iSQ les plus faibles et donc a priori les moins inhéremment productives peuvent et vont bénéficier le plus de progrès technique **pTec** de manière à atteindre, voire dépasser, une certaine moyenne environnementale **ASQ** repérable sur une courbe de réponse à l'azote propre surmontant du coup des de telles contraintes socio-économiques ;
• des courbes de réponse à l'azote fertilisant ***RDN** = **f(TUN)*** est établie selon EP4252516 et donc élaborée sur la base de données climatiques CLIM et agronomiques AGRO sur le potentiel de rendement protéique RDN de la parcelle ainsi qu'une deuxième courbe de réponse à l'azote fertilisant TUN à titre de moyenne environnementale, toujours selon EP4252516 mais comportant comme valeurs de RDN moyennes locales ou régionales prédites au niveau de la parcelle selon le même procédé qu'en EP4252516 à titre de moyenne environnementale dites ici ASQ ;
• un plan de fertilisation P, K & H dit ici NPKH est réalisé selon la première revendication d'EP25206011.6 et donc sur la base de dbase_AgroNum **(dbase_agn)** contenant les data AGRO, PEDO et CLIM dont les itinéraires techniques conduisant à la conservation de la matière organique du sol dits virtuels contiennent néanmoins les objectifs de rendements protéiques RDN et/ou les taux de fertilisations azotées TUN souhaités correspondant ;
• le progrès technique pTec est établit et définit selon EP4491001 à savoir en tant qu'augmentation des rendements azotés RDN attribuable à une modification des itinéraires techniques itec par rapport à la courbe de réponse CRP(N) lorsque cette performance agronomique est supérieure à l'efficacité de cette modification EP4491001 permettant ainsi le calcul et l'émission de *crédits azote remboursables* RNC ;
• les contraintes applicables lors de la réalisation desdits plans de fertilisation NPKH dont les données AGRO sont contenues dans la base de données **dbase_tls** de manière à ce que ces plans de fertilisation contiennent par la suite des valeurs PEDO commensurables aux valeurs les plus courantes, à savoir les pH telluriques de références, les disponibilités de P & K tellurique, les seuil critiques P & K tellurique et les rendements unitaires RUP & RUK permettant ains de valoriser **dbase_tls** maintenant composée de données AGRO de tels plans de fertilisation virtuels et des données PEDO & CLIM correspondantes réintégrées réitérativement à la base de donnée **dbase_int.**

3. **Méthode de fertilisation raisonnée** selon une quelconque des revendications précédentes **caractérisée en ce que** ;
• les bases de données dbase ne contiennent ***pas*** à titre de données AGRO, PEDO ou CLIM annualisées mais comportent les coordonnées géospatiales de latitude / longitude les plus au centre de la parcelle, et dont la première tranche comprend les données AGRO des rendements in situ transmises par l'utilisateur (RDT, RDN et RUN), la deuxième tranche les data pédologique PEDO, et la troisième tranche de données climatique CLIM afin de prendre en compte la météorologie ;
• les plans de fertilisation NPKH selon EP25206011.6 alinéas [0020] à [0036] sont interopérables avec l'agriculture de précision pour grandes culture à graines *non-Fabaceae* de courbes de réponses au niveau de la parcelle décrivant les doses d'application d'engrais phosphoriques et potassique dPK ;
• à titre d'information socio-économique et agronomique utile à l'agriculteur-utilisateur, seules les taux et modes de fertilisation minéral commensurables avec l'état de la technique parce que contraints de respecter +/- certains écarts [0049] sont retenus et intégrés à dbase_int [Figures 4 & 5] ;
• cette information (ré)introduite à titre de nouvelles conditions initiales comprend les rendements unitaires RDN, RDP et RDK, les taux de fertilisations N, P & K correspondant ainsi que les coordonnées GPS au centre de la parcelle cette information provenant de la « réalisation virtuelle » (sic) de plans de fertilisation - ou PPF, AgroNum^{™} contraints de manière à être commensurables à l'état de la technique est décrite formellement entant que ***information** =* ***f*(*PPF, contraintes)*** sachant que cette information va par la suite servir à l'élaboration de plan prévisionnels de fertilisation ***PPF'** = **f(PPF, information).***

4. **Méthode de fertilisation raisonnée** selon une quelconque des revendications précédentes **caractérisée en ce que** *l'intelligence artificielle collective* CAIAC est une implémentation de l'IA qui comportant une rétroaction continuelle de nouvelle conditions initiales et/ou expérimentales appliquées à la calibration d'un quelconque algorithme prédictif, conditions collectivement reconnues ou reconnaissables comme commensurables avec l'état de la technique et la réglementation.

5. **Méthode de fertilisation raisonnée** selon la revendication précédente **caractérisée en ce que** dbase_int contient les conditions initiales considérées comme collectivement acceptable à titre *d'intelligence collective* (CAIAC), dbase_exp l'ensemble des itinéraires techniques expérimentaux y compris les témoins - positifs ou négatifs, modalités de références à l'essais, etc. qui seront confrontées à ce premier jet d'intelligence collective, dbase_agn le résultat de ce criblage impartial par imposition d'une simple règle heuristique au sens de EP4101280, et enfin dbase_tls contient les plans prévisionnels de fertilisations virtuels contraints à être commensurables à l'état de la technique au sens d'EP25206011.6 ajoutés à dbase_int.

6. **Méthode de fertilisation raisonnée** selon une quelconque des deux revendications précédentes **caractérisée en ce que** ;
• la dbase_agn, sous-ensemble de la dbase_exp ne comportant que des itinéraires techniques aux rendements unitaires ajustés RUN conduisant à la conservation de la matière organique du sol du fait du criblage de dbase_exp ne retenant que les itinéraires techniques au sens de EP4101280 et EP4252516 contient à titre de variables AGRO à prédire par IA calibrée selon dbase_agn des doses d'engrais dPK et seuils critique cPK ;
• l'établissement des relations [dPK :: TUN], [cPK :: dPK] et [pHe :: TUN] ce par modèles algébriques linéaires ou multilinéaires comportant au moins les coordonnées latitude & longitude les plus au centre de la parcelle, un quelconque indice de productivité de la parcelle, ou encore la teneur en argile de la parcelle.

7. **Méthode de fertilisation raisonnée** selon une quelconque des revendications précédentes **caractérisée en ce que** la préparation des plans de fertilisation virtuels se fait selon EP25206011.6 sur la base d'unités cartographiques locales et de courbes de réponses décrivant les doses d'application d'engrais phosphoriques et potassique dPK, les seuils critiques en phosphore et potassium telluriques cPK ainsi que les *pH telluriques éventuels* (pHe) fonction de du taux de fertilisation azotée TUN et donc de l'objectif de rendement protéique RDN correspondant sachant que ;
• les rRSQ à titre de data AGRO servant au rétro-calcul de RUN sont remplacés par des valeurs de dPK, tPK à titre de cPK et pHe afin de calibrer pour chacune de ces variables un algorithme d'IA prédictive ;
• les relations [dPK ::TUN] ou [dPK ::RDN] indiquent les doses d'engrais PK à appliquer au champ pour atteindre les objectifs de rendements RDN durables selon la courbe de réponse [RDN ::TUN] au sens de EP4252516,
• les relations [tPK ::dPK], [tPK ::RDN] ou [tPK ::TUN] établissent les seuils critiques cPK au-dessous desquels les susdites doses d'engrais PK doivent impérativement être appliquées pour atteindre ces susdits objectif de rendements RDN,
• les relations [pHe ::TUN] , [pHe ::RDN] voire [pHe ::dPK] déterminent le statut acido-basique SAB éventuel du sol à ces susdits taux de fertilisation N, P & K.

8. **Méthode de fertilisation raisonnée** selon une quelconque des revendications précédentes **caractérisée en ce que** ;
• les contraintes portent sur les pH telluriques de références, les rendements unitaires RUP/K, les seuils critiques cPK par rapport à disponibilités telluriques PK ainsi que les seuils critiques de références à travers l'Europe selon EP25206011.6 ;
• ces recommandations doses d'engrais dPK, seuils critiques cPK et pH telluriques éventuels pHe sont contraints de manière à assurer leur commensurabilité avec les références habituelles et obtenir des plans de fertilisation plus ergonomiques et moins coûteux ;
• les pHe - eau ou CaCl₂, sont commensurables à ceux proposés par le conseil agricole via analyse de terre et/ou de base de données reconnues,
• les rendements phosphoriques RDP & RDK sont commensurables aux doses dPK recommandées par le plan de fertilisation afin d'assurer le remplacement durable des éléments exportés,
• les seuils cPK sont, eux, commensurables aux disponibilités - alias fournitures du sol en de P et K telluriques (*available_PK,* angl.), et enfin
• les itinéraires technique itec retenues ont des rendements unitaires simples (run ; kg_Ngrain/kg_Nfertilisant) compris entre 0.6 et 1.0 +/- 10% par comparaison aux itec témoin dont ces run simples sont compris entre 0.5 et 0.9 +/- 10% sachant que les crédits azote remboursables RNC selon EP4491001 sont supérieurs à 0.00 et que ces itec ne sont pas irrigués.
sachant que les doses d'engrais dPK peuvent être exprimées en kg-P₂O₅/ha/an et en kg-K₂O/ha/an, et le P tellurique phyto-disponible en mg-P_{Olsen}/kg de sol et en K en mg-K_NH_{4-acétate}/kg de sol. Les teneurs en P tellurique (mg-P/kg-sol) sont avantageusement obtenues selon Olsen et al. 1954 et en K tellurique dit « échangeable » selon la méthode de l'acétate d'ammonium.

9. **Méthode de fertilisation raisonnée** selon les trois revendications précédentes **caractérisée en ce que** les *pH éventuels* (pHe) atteints lorsque les doses d'engrais N, P et K selon l'invention le sont *sans* chaulage ou l'apport d'amendements visant à modifier le statut acido-basique SAB du sol de la parcelle.

10. **Méthode de fertilisation raisonnée** selon une quelconque des revendications précédentes et plus particulièrement la Revendication 2 **caractérisée en ce que** le progrès technique pTec sur parcelles a priori les moins productives sont particulièrement élevés du fait que la courbe de réponse CRP(N) est inférieure à la moyenne environnementale calculée à titre de témoins trt de référence, pTec effectif jusqu'à ce qu'il génère des crédits azote remboursables RNC calculables selon EP4491001.

11. **Méthode de fertilisation raisonnée** selon la revendication précédente **caractérisée en ce que** cette apparente moindre productivité a priori socio-économiquement préjudiciable est exprimé par le ratio rARSQ [Tableau 2], à savoir le rapport entre un rendement azotée RDN (kg-Ngrain/kg-Nfertilisant) situe sur la courbe CRP(N) à un taux de fertilisation azoté TUN donnée et un RDN situé sur la courbe moyenne environnementale à ce même TUN est inférieur à 1,00.

12. **Méthode de fertilisation raisonnée** selon les deux revendications précédentes **caractérisée en ce que** la moyenne environnementale est générée pour le calcul de *crédits azote remboursables* (RNC ; [Tableau 2]) fonctions d'un éventuel progrès technique pTec, à savoir et plus particulièrement selon EP4101280 ainsi que EP4491001 et EP25206011.6.

13. **Méthode de fertilisation raisonnée** selon une quelconque des revendications précédentes **caractérisée en ce que** les data CLIM contiennent à titre de variables - ou *classificateurs,* des probabilité de transitions markoviennes Pij établies en posant i et j > 1 à savoir i = [1, 2, ... ] et j = [1, 2, ... ] permettant d'obtenir les Pij P11, P12, P21, P22 de séries chronologiques climatiques contenant des historiques et/ou des projections climatiques régionales de modèles climatiques globaux et régionaux pour des variables clés à l'aide de méthodes mathématiques et codes informatiques pouvant générer des Pij.

14. **Méthode de fertilisation raisonnée** selon une quelconque des revendications précédentes **caractérisée en ce que** l'interopérabilité avec l'agriculture de précision AP est effectuée à l'aide d'une technologie d'agriculture de précision via une interface numérique consistant en une courbe de réponse à l'engrais azoté TUN agissant dans un premier temps comme une interface informationnelle, et dans une seconde étape opérationnelle, l'utilisateur obtenant d'abord les estimations des doses d'engrais N, P et K ainsi que la valeur de pHe, puis intégrant en relayant ces informations, numériquement ou analogiquement, auxdites technologies d'agriculture de précision afin de former, dispenser en vrais, et appliquer au champ ces doses d'engrais N, P et K sur le terrain, et ce - là encore, via toute technologie de communication, à savoir les réseaux cellulaires, le WiFi, les cartes mémoire, *clouds* et clés USB, le téléphone ou la télécopie, ou par activation manuelle, vocale ou écrite.

15. **Méthode de fertilisation raisonnée** selon une quelconque des revendications précédentes **caractérisée en ce que** toutes les grandes cultures à graines *non-Fabaceae* et notamment le BTH (blé tendre d'hiver), BTP (blé tendre de printemps), ORH (orge d'hiver), ORP (orge de printemps), SCL (seigle), TRC (triticale), AVN (avoine), CLZ (colza), ZEA (maïs-grain) et TSL (tournesol) sont concernées.

## Revendications modifiées

### Revendications modifiées conformément à la règle 137(2) CBE.

1. Méthode de fertilisation raisonnée comprenant (i) un mode d'appréciation de la performance agronomique d'une grande culture à graines non-*Fabaceae,* (ii) la calibration d'un algorithme d'IA qu'avec des data d'itinéraires technique itec durables conduisant à la conservation de la matière organique du sol, (iii) une courbe de réponse de ces cultures à l'azote fertilisant, (iv) un plan de fertilisation, (v) une mesure quantitative du progrès technique, ainsi que (vi) des contraintes applicables lors de la réalisation virtuelle desdits plans de fertilisation, à savoir et toujours selon l'état de la technique ;
• le mode d'appréciation de la performance agronomique pour grandes cultures non-*Fabaceae* au niveau de la parcelle est réalisé selon la formule **(run²)/d_{RUN}/iSQ** = **RUN/iSQ** = **RSQ** sachant que le rendement unitaire simple, run (kg-N_{grain}/kg-N_{fertilisant}) ajusté selon un rendement standard empirique, d_RUN, et un indice de la productivité inhérente de la parcelle, iSQ, et que l'algorithme d'lA calcul la référence rRSQ pour la parcelle, et la durabilité entant que **Durabilité** = **RSQ/rRSQ** ≈ **1.00,** les RUN réputés durable servent au rétro-calcul du besoin unitaire de la pratique culturale ou l'itinéraire technique en question, a_AgroNum pour estimer la dose prévisionnelle d'engrais azotée correspondante, TUN (kg-Nf/ha) = (a_AgroNum · RDN) lorsque qu**'a_AgroNum** = 1/√**(RUN x dRUN)** de manière à rétro-calculer l'objectif de rendement durable, RDN (kg-Ng/ha) correspondant = (TUN/a_AgroNum), d_{RUN} étant lui perfectible par compilation, voire méta-analyse ;
• la calibration réitérative à titre *d'intelligence artificielle collective* (CAIAC) seules les data agro-pédoclimatiqus des itinéraires techniques les plus durables conduisant à la conservation de la matière organique du sol sont retenus dans la **dbase_agn** pour la calibration de l'algorithme générant les courbes de réponse à l'azote fertilisant CRP(N),
• des courbes de réponse à l'azote fertilisant ***RDN** = **f(TUN)*** est établie et élaborée sur la base de données climatiques CLIM et agronomiques AGRO sur le potentiel de rendement protéique RDN de la parcelle ainsi qu'une deuxième courbe de réponse à l'azote fertilisant TUN à titre de moyenne environnementale dite ASQ comportant comme valeurs de RDN moyennes locales ou régionales prédites au niveau de la parcelle ;
• un plan de fertilisation P, K & H dit ici NPKH réalisé sur la base d'une base de donnée dite **dbase_agn** contenant les data AGRO, PEDO et CLIM dont les itinéraires techniques conduisant à la conservation de la matière organique du sol dits virtuels contiennent néanmoins les objectifs de rendements protéiques RDN et/ou les taux de fertilisations azotées TUN souhaités correspondant ;
• la mesure quantitative du progrès technique pTec est établie en tant qu'augmentation des rendements azotés RDN attribuable à une modification des itinéraires techniques itec par rapport à la courbe de réponse CRP(N) lorsque cette performance agronomique est supérieure à l'efficacité de cette modification permettant ainsi le calcul et l'émission de *crédits azote remboursables* RNC ;
• les contraintes applicables lors de la réalisation desdits plans de fertilisation NPKH dont les données AGRO sont contenues dans la base de données **dbase_tls** de manière à ce que ces plans de fertilisation contiennent par la suite des valeurs PEDO commensurables aux valeurs les plus courantes, à savoir les pH telluriques de références, les disponibilités de P & K tellurique, les seuil critiques P & K tellurique et les rendements unitaires RUP & RUK permettant ains de valoriser **dbase_tls** maintenant composée de données AGRO de tels plans de fertilisation virtuels et des données PEDO & CLIM correspondantes réintégrées réitérativement à la base de donnée **dbase_int.**
sachant que ;
*l'apprentissage automatique* (AA) d'un algorithme *d'intelligence artificielle* (IA) à partir de conditions initiales contenues dans une quelconque base de données **dbase_int** applicable à une quelconque base de données expérimentales **dbase_exp** contenant de l'information sur un ensemble *d'itinéraires technique* (itec) mais aussi est surtout le criblage réitératif de dbase _exp à titre *d'intelligence artificielle collective (CAIAC)*
et sachant aussi que ;
l*'information -* c'est-à-dire les données chiffrés inédites sur les rendements et les taux de fertilisation correspondants générés par la contrainte des plans de fertilisation virtuels modifiant les conditions initiales de manière à les rendre encore plus commensurables avec l'état de la technique actuellement pratiquée par le conseil agricole, provenant de l'application desdites contraintes aux dits plans de fertilisation est par la suite introduite en **dbase_int** contenant les conditions initiales pour ladite calibration réitérative de l'algorithme sachant que ;
• procéder sans prélèvements de sols de la parcelle simplifie la préparation des plans de fertilisation, l'échantillonnage - s'il y a, étant, lui, limité aux rendements agronomiques, tandis que la taille des doses d'application d'engrais NPK étant simplement relevés et transmis par l'agriculteur, sans échantillonnage,
• l'agriculteur/trice n'est plus obligé/e de de transmettre les détails de ses pratiques culturales - y compris l'année du semis, culture & récolte, seules le coordonnées GPS au centre de la parcelle, voire l'objectif de rendement azoté RDN étant transmis pour fin de conseil agricole effectué donc sans remontée d'informations détaillées de l'itec sur la parcelle,
• les bases de données dbase ne contiennent pas à titre de données AGRO, PEDO ou CLIM annualisées mais comportent les coordonnées géospatiales de latitude / longitude les plus au centre de la parcelle, et dont la première tranche comprend les données AGRO des rendements in situ transmises par l'utilisateur (RDT, RDN et RUN), la deuxième tranche les data pédologique PEDO, et la troisième tranche de données climatique CLIM afin de prendre en compte la météorologie ;
et qu'in fine ;
le susdit AA contraint (AAC) est ainsi rendu *autonome* (AAAC) lorsque le conseil agricole est ainsi réalisé virtuellement du fait de l'application des susdites contraintes aux plans de fertilisations candidats réalisés virtuellement selon l'état de la technique rendant du coup facultatif la remontée de données agriculteur de la parcelle,
tout en précisant que ;
• les plans de fertilisation NPKH sont interopérables avec l'agriculture de précision pour grandes culture à graines *non-Fabaceae* de courbes de réponses au niveau de la parcelle décrivant les doses d'application d'engrais phosphoriques et potassique dPK ;
• à titre d'information socio-économique et agronomique utile à l'agriculteur-utilisateur, seules les taux et modes de fertilisation minéral commensurables avec l'état de la technique parce que contraints de respecter +/- certains écarts sont retenus et intégrés à dbase _int ;
• cette information (ré)introduite à titre de nouvelles conditions initiales comprend les rendements unitaires RDN, RDP et RDK, les taux de fertilisations N, P & K correspondant ainsi que les coordonnées GPS au centre de la parcelle cette information provenant de la « réalisation virtuelle » (sic) de plans de fertilisation - ou PPF, contraints de manière à être commensurables à l'état de la technique est décrite formellement entant que ***information*** = ***f (PPF, contraintes)*** sachant que cette information va par la suite servir à l'élaboration de nouveaux plan prévisionnels de fertilisation touts aussi durables et commensurables, ***PPF*'** *= **f (PPF, information).***

2. **Méthode de fertilisation raisonnée** selon la revendication précédente lorsque les data CLIM contiennent à titre de variables - ou *classificateurs,* des probabilité de transitions markoviennes Pij en posant 1 et j > 1 à savoir i = [1, 2, ... ] et j = [1, 2, ... ] permettant d'obtenir les Pij P11, P12, P21, P22 ... de séries chronologiques climatiques contenant des historiques et/ou des projections climatiques régionales de modèles climatiques globaux et régionaux pour des variables clés à l'aide de méthodes mathématiques et codes informatiques pouvant générer des Pij sachant que ces Pij sont des probabilité de transitions d'un processus markovien de passer qu'un système pas d'un état à un autre, soit la probabilité Pij est la probabilité de passer de l'état i à l'état j au prochain pas de temps.

3. **Méthode de fertilisation raisonnée** selon une quelconque des revendications précédentes lorsque que *l'intelligence artificielle collective* CAIAC est une implémentation de l'IA qui comportant une rétroaction continuelle de nouvelle conditions initiales et/ou expérimentales appliquées à la calibration d'un quelconque algorithme prédictif, conditions collectivement reconnues ou reconnaissables comme commensurables avec l'état de la technique et la réglementation.

4. **Méthode de fertilisation raisonnée** selon une quelconque des revendications précédentes sachant que dbase_int contient les conditions initiales considérées comme *collectivement acceptable* à titre *d'intelligence collective* (CAIAC), dbase_exp l'ensemble des itinéraires techniques expérimentaux y compris les témoins - positifs ou négatifs, modalités de références à l'essais, etc. qui seront confrontées à ce premier jet d'intelligence collective, dbase_agn le résultat de ce criblage impartial par imposition d'une simple règle heuristique, et enfin dbase_tls contient les plans prévisionnels de fertilisations virtuels contraints à être commensurables à l'état de la technique ajoutés à dbase_int.

5. **Méthode de fertilisation raisonnée** selon une quelconque des revendications précédentes en précisant que ;
• la dbase_agn, sous-ensemble de la dbase_exp ne comportant que des itinéraires techniques aux rendements unitaires ajustés RUN conduisant à la conservation de la matière organique du sol du fait du criblage de dbase_exp ne retenant que les itinéraires techniques itec contient à titre de variables AGRO à prédire par IA calibrée selon dbase_agn des doses d'engrais dPK et seuils critique cPK,
• l'établissement par la suite des relations (dPK ~ TUN), (cPK ~ dPK) et (pHe ~ TUN) par à l'aide de simples modèles algébriques linéaires ou multilinéaires comportant au moins les coordonnées latitude & longitude les plus au centre de la parcelle, un quelconque indice de productivité de la parcelle, ou encore une quelconque valeur de la teneur en argile de la parcelle,
• dPK, ou simplement dP ou dK selon le cas, sont les dP₂O₅ ou dK₂O, i.e. les niveaux de fertilisation en P & K recommandées apportées au sol à titre de matière fertilisante généralement en équivalant P₂O₅ et K₂O, respectivement par hectare et par année,
• cPK, ou simplemnet cP ou cK selon le cas), sont teneurs en P & K du sol à titre de seuils critiques rendant l'application des dPK impérative généralement exprimés en mg-P & K par kg de prélèvement de terre,
• pHe est le pH tellurique *éventuel* à un niveau de fertilisation azotée tel que recommandé *sans* pour autant avoir à recourir à des amendements ou au chaulage.

6. **Méthode de fertilisation raisonnée** selon une quelconque des revendications précédentes lorsque la préparation des plans de fertilisation virtuels se fait selon EP4809805 sur la base d'unités cartographiques locales et de courbes de réponses décrivant les doses d'application d'engrais phosphoriques et potassique dPK, les seuils critiques en phosphore et potassium telluriques cPK ainsi que les *pH telluriques éventuels* (pHe) fonction de du taux de fertilisation azotée TUN et donc de l'objectif de rendement protéique RDN correspondant sachant que ;
• les rRSQ à titre de data AGRO servant au rétro-calcul de RUN sont remplacés par des valeurs de dPK, tPK à titre de cPK et pHe afin de calibrer pour chacune de ces variables un algorithme d'IA prédictive puisque qu'ici tPK ≡ cPK du fait que tPK est définis à titre de paramètre pédologique, teneurs tellurique en phosphore (P) et potassium (K) le plus souvent foncièrement approximatives mais néanmoins suffisamment informatives puisque géoréférencées dans les bases de données pédolo-giques reconnues et faire office en première approximation si elles correspondent à des itinéraires techniques durables conduisant à la conservation de la matière organique du sol,
• les relations (dPK ~ TUN) ou (dPK ~ RDN) indiquent les doses d'engrais PK à appliquer au champ pour atteindre les objectifs de rendements RDN durables selon la courbe de réponse (RDN ~ TUN) au sens de EP4252516,
• les relations (tPK ~ dPK), (tPK ~ RDN) ou (tPK ~ TUN) établissent les seuils critiques cPK au-dessous desquels les susdites doses d'engrais PK doivent impérativement être appliquées pour atteindre ces susdits objectif de rendements RDN,
• les relations (pHe ~ TUN) , (pHe ~ RDN) voire (pHe ~ dPK) déterminent le statut acido-basique SAB éventuel du sol à ces susdits taux de fertilisation N, P & K.

7. **Méthode de fertilisation raisonnée** selon une quelconque des revendications précédentes en précisant que ;
• les contraintes portent sur les pH telluriques de références, les rendements unitaires RUP/K, les seuils critiques cPK par rapport à disponibilités telluriques PK ainsi que les seuils critiques de références à travers l'Europe selon EP4809805 ;
• ces recommandations doses d'engrais dPK, seuils critiques cPK et pH telluriques éventuels pHe sont contraints de manière à assurer leur commensurabilité avec les références habituelles et obtenir des plans de fertilisation plus ergonomiques et moins coûteux ;
• les pHe - eau ou CaCl₂, sont commensurables à ceux proposés par le conseil agricole via analyse de terre et/ou de base de données reconnues,
• les rendements phosphoriques RDP & RDK sont commensurables aux doses dPK recommandées par le plan de fertilisation afin d'assurer le remplacement durable des éléments exportés,
• les seuils cPK sont, eux, commensurables aux disponibilités - alias fournitures du sol en de P et K telluriques (*available_PK,* angl.), et enfin
• les itinéraires technique itec retenues ont des rendements unitaires simples (run ; kg_Ngrain/kg_Nfertilisant) compris entre 0.6 et 1.0 +/- 10% par comparaison aux itec témoin dont ces run simples sont compris entre 0.5 et 0.9 +/- 10% sachant que les crédits azote remboursables RNC selon EP4491001 sont supérieurs à 0.00 et que ces itec ne sont pas irrigués.
sachant que les doses d'engrais dPK peuvent être exprimées en kg-P₂O₅/ha/an et en kg-K₂O/ha/an, et le P tellurique phyto-disponible en mg-P_{Olsen}/kg de sol et en K en mg-K_NR_{4-acétate}/kg de sol. Les teneurs en P tellurique (mg-P/kg-sol) sont avantageusement obtenues selon Olsen et al. 1954 et en K tellurique dit « échangeable » selon la méthode de l'acétate d'ammonium.

8. **Méthode de fertilisation raisonnée** selon les deux revendications précédentes lorsque lesdites contraintes sont exprimées formellement comme suit ;
| | | |
|---|---|---|
| Contrainte 1 : | abs(1-pHwater agronum/pHwater_esdac) | <= 0.10 +/- 20% |
| Contrainte 2 : | abs(1-pHcacl2_agronum/pHcacl2_esdac) | <= 0.10 +/- 20% |
| Contrainte 3 : | abs(1-RDP2O5/dP2O5) | <= 0.10 +/- 20% |
| Contrainte 4 : | abs(1-RDK2O/dK2O) | <= 0.10 +/- 20% |
| Contrainte 5 : | abs(1-(P_available/(cP*2*bd))) | <= 0.25 +/- 20% |
| Contrainte 6 : | abs(1-(K_available/(cK*2*bd))) | <= 0.33 +/- 20% |
| Contrainte 7 : | abs(1-cP_agronum/cP_europe) | <= 0.25 +/- 20% |
| Contrainte 8 : | abs(1-cK_agronum/cK_europe) | <= 0.33 +/- 20% |
en précisant que *abs* est la valeur absolue des opérations entre parenthèses, pHwater_ et pHcacl2_agronum les valeurs prédites, _esdac les valeurs de références de bases de données open-source reconnues (eg. www.esdac.irc.ec.europa.eu/), RDP2O5 et RDK2O les mobilisation par les grains de P₂O₅ et K₂O, respectivement et généralement exprimées en kg/ha/annnée, dP2O5 et dK2O les doses hectares dPK, P_ & K_available les teneurs (mg/kg) telluriques de références elles aussi via les susdites dbase, cP & K tels que définis ici, et bd *(bulk density,* angl.) une certaine mesure référence de la densité apparente du sol sur 20 cm de profondeur elle aussi disponible via des dbases de type Esdac.

9. **Méthode de fertilisation raisonnée** selon une quelconque des revendications précédentes sachant que les *pH éventuels* (pHe) atteints lorsque les doses d'engrais N, P et K selon l'invention le sont *sans* chaulage ou l'apport d'amendements visant à modifier le statut acido-basique SAB du sol de la parcelle, le pHe étant donc effectivement le pH tellurique *éventuel* à un niveau de fertilisation azotée tel que recommandé *sans* pour autant avoir à recourir à des amendements ou au chaulage.

10. **Méthode de fertilisation raisonnée** selon une quelconque des revendications précédentes comprenant l'interopérabilité avec la planification des stockes d'engrais NPKMg, la dispense de quantités raisonnées d'engrais vers un épandeur ou tout autre mécanisme d'application agronomique de ce type d'engrais respectant ce plan de fertilisation, la modulation intra-parcellaire ou -temporelle à travers la parcelle ou la campagne à titre d'agriculture de précision, ainsi que la récolte des grains inscrite dans la base de données (dbase) AgroNum assurant ainsi l'évolution graduelle des recommandations via cette intelligence artificielle collective par *apprentissage automatique autonome contraint* (AAAC) impliquant donc une réalisation « virtuelle » desdits plans de fertilisation dont certains sont ainsi retenus et intégrés aux bases de données AgroNum, ladite interopérabilité étant elle effectuée à l'aide d'une technologie de communication, à savoir les réseaux cellulaires, le WiFi, les cartes mémoire, *clouds* et clés USB, le téléphone ou la télécopie, ou par activation manuelle, vocale ou écrite permettant à l'utilisateur d'obtenir des valeurs estimées des doses d'engrais N, P, K voire Mg ainsi que la valeur du pH tellurique éventuel pHe, et de relayer par la suite ces informations, numériquement ou analogiquement, auxdites technologies d'agriculture de précision afin de reformer, redispenser en vrac, et réappliquer au champ ces doses d'engrais à travers la parcelle..

11. **Méthode de fertilisation raisonnée** selon une quelconque des revendications en spécifiant que toutes les grandes cultures à graines *non-Fabaceae* et notamment le BTH (blé tendre d'hiver), BTP (blé tendre de printemps), ORH (orge d'hiver), ORP (orge de printemps), SCL (seigle), TRC (triticale), AVN (avoine), CLZ (colza), ZEA (maïs-grain) et TSL (tournesol) sont concernées.
